(19) **Europäisches Patentamt**
**European Patent Office**
**Office européen des brevets**

(11) **EP 1 960 947 B1**

(12) **EUROPEAN PATENT SPECIFICATION**

(45) Date of publication and mention
of the grant of the patent:
**08.09.2010 Bulletin 2010/36**

(51) Int Cl.:
***G06K 19/07*** (2006.01)

(21) Application number: **06832046.4**

(86) International application number:
**PCT/IB2006/054554**

(22) Date of filing: **01.12.2006**

(87) International publication number:
**WO 2007/066267 (14.06.2007 Gazette 2007/24)**

(54) **CIRCUIT ARRANGEMENT AND METHOD FOR OPERATING A CIRCUIT ARRANGEMENT**

SCHALTUNGSANORDNUNG UND VERFAHREN ZUM BETRIEB EINER
SCHALTUNGSANORDNUNG

CIRCUIT ET PROCEDE PERMETTANT D'ACTIVER UN CIRCUIT

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK RS**

(30) Priority: **07.12.2005 EP 05111799**

(43) Date of publication of application:
**27.08.2008 Bulletin 2008/35**

(73) Proprietor: **NXP B.V.**
**5656 AG Eindhoven (NL)**

(72) Inventors:
• **RIEMSCHNEIDER, Karl-Ragmar**
**52066 Aachen (DE)**

• **ROEHM, Horst**
**52066 Aachen (DE)**
• **TOBERGTE, Wolfgang**
**52066 Aachen (DE)**

(74) Representative: **Krott, Michel et al**
**NXP B.V.**
**Intellectual Property & Licensing Department**
**High Tech Campus 32**
**5656 AE Eindhoven (NL)**

(56) References cited:
**EP-A- 0 997 842       EP-A- 1 168 226
EP-A- 1 313 169       JP-A- 2005 073 113
US-A- 3 713 148       US-A- 4 040 053
US-B1- 7 167 090      US-B2- 6 848 621**

EP 1 960 947 B1

**EP 1 960 947 B1**

**Description**

The invention relates to a circuit arrangement and to a method for operating a circuit arrangement, in particular a circuit arrangement for antenna matching, in particular for matching between an antenna and a circuit, in particular for data carriers which communicate and are supplied with energy in a wireless manner, that is to say so-called transponders.

In the technical field of transponders, many endeavors are currently aimed at bringing frequency ranges between a few hundred MHz and a few GHz into wider use once transponders have become well established in lower frequency ranges from around 100 kHz to a few tens of MHz. Statutory provisions and comparable national and international regulations tie almost all applications to specific bands; which are known as the ISM frequency bands. Also defined is a maximum field strength which may be generated by the transponder base stations. ISM frequency bands lie for example at around 434, 868, 915, 2450, 5800 and 24125 MHz center frequency.

Systems in this frequency range are preferred either when relatively large ranges are to be achieved or when the complexity of the antennas is to be kept simple. In some cases, a very small antenna may even be integrated on the circuit.

The complexity of the antennas should be kept low in particular when the transponder chip is to be integrated in objects, such as packagings, documents, security papers, banknotes, in which antennas are difficult to accommodate. For many planned applications, e.g. an electronic tag, the production cost of the transponder must be within the range of a few cents. This also provides a cost-effective antenna. In these applications, the efficiency of the high-frequency circuit on the antenna terminal is a decisive factor for significantly improving said systems.

The energy for operating the transponder circuit is supplied in a wireless manner via a high-frequency alternating field. The data used to address the transponder are transmitted by a modulated signal via a high-frequency alternating field. The same applies in respect of the data which the transponder sends back. In most transponder designs, the high-frequency energy and signal transmission takes place via the free space (air gap) and also through the materials present in the vicinity of the transponder.

An inductive supply of energy to coils on a transponder circuit is also known from the prior art, for example from DE 37 21 822. This method of supplying energy can be used more efficiently than in the previous prior art by the above-mentioned raised operating frequencies and by an improved quality of the integrated coils.

The prior art discloses different methods to adjust the resonance frequency of a transponder resonance circuit. Document JP2005073113 discloses such method using feedback circuitry wherein a decision network controls the capacitance of an adjustable capacitor so that the rectified output voltage to be kept in its maximum.

Document EP1168226, regarded as the closest prior art document, discloses a method to be used in a transponder having at least two resonators, each comprising a varactor, the adjustment of the varactors being based on a measurement of the output voltage of each resonance circuit, wherein, after plurality of measurements of the output voltage by different values of the capacitor, the optimal value of the capacitor is reached iteratively or by extrapolation.

There is a requirement for an improved and less sensitive circuit arrangement for supplying energy to a transponder.

This requirement is met by the circuit arrangement and the method for operating a circuit arrangement according to the features of the independent claims.

The invention is defined in the accompanying claims.

According to one example of embodiment, a circuit arrangement tor a transponder comprises a control circuit and an input circuit, wherein the input circuit comprises a first resonator, which comprises a first coil and a first capacitor, and a second resonator, which comprises a second coil and a second capacitor. The first capacitor is designed as a first varactor and the second capacitor is designed as a second varactor. Furthermore, the first resonator and the second resonator are designed in such a way that they can be used to provide a first output voltage and a second output voltage, respectively. Moreover, the control circuit is desired in such a way that it can be used to control at least one of the varactors so that a resonant frequency of the corresponding resonator can essentially be set to a predefined transmission frequency such that the output voltage of the corresponding resonator of the input circuit can be increased. In particular, the control circuit may be configured as a closed-loop control circuit.

According to one example of embodiment, a method for operating a control circuit of a circuit arrangement is provided, which circuit arrangement comprises a control circuit and an input circuit, wherein the input circuit comprises a first resonator, which first resonator comprises a first coil and a first capacitor, and a second resonator, which second resonator comprises a second coil and a second capacitor, and wherein the first capacitor is designed as a first varactor and the second capacitor is designed as a second varactor. The method comprises evaluating a first output voltage of the first resonator by means of the control circuit and controlling the first varactor such that the first output voltage is increased. In particular, increasing the output voltage may involve maximizing the output voltage.

In this application, a transponder means in particular a component which receives incoming signals and responds to these incoming signals, that is to say generates outgoing signals. These include active and passive transponders, for example RFID tags, remote controls, wireless sensors and similar components. The predefined transmission frequency may in this case be a frequency which is used for transmission by a base station with which a transponder communicates, for example an ISM frequency band.

By means of a circuit arrangement according to the above example of embodiment, it is possible to reduce the effect of objects in the vicinity of the circuit arrangement, which may in particular be designed for use in a transponder, on the available high-frequency energy and on the signal transmission, said effect being particularly disruptive at higher frequencies. One possible effect may be that part of the energy of the energy-supplying alternating field may be absorbed in certain materials. By way of example, due to resonance phenomena, water in the frequency band around 2.4 GHz absorbs a great deal of energy from the alternating electromagnetic field. Many natural materials and also the human body contain a large amount of water. This water in the area between the transponder and a base station, which transmits signals to the transponder, often gives rise in the case of conventional transponders to a reduced range in which sufficient energy is available in the transponder. Furthermore, in practice, this also often results in a reduced functional reliability in the case of conventional transponders. If in conventional transponders it is not possible to select a frequency band with little energy absorption, particular attention must then be paid to making the transponder function in an optimized and most efficient manner. Such reduced ranges and reduced reliabilities can be avoided with a circuit arrangement according to the invention.

With a circuit arrangement according to the above example of embodiment, effective matching of the input circuit to the environment-dependent change in coil impedance (antenna impedance) is possible, as a result of which it is possible to avoid or at least reduce negative effects of the environment by means of the circuit arrangement according to the invention. Such negative effects which can be reduced by means of a circuit arrangement according to the invention are for example the effects of various materials in the vicinity of the transponder antennas. In particular, the introduction of dielectric materials with high specific dielectric constants in the vicinity of the antenna means that the complex resistance (impedance) of the antenna is appreciably changed. When designing circuit arrangements, particularly in the case of transponders, the impedances of antenna and circuit have been matched as well as possible while assuming defined conditions - usually free space around the antenna. In the case of conventional transponders, it may be the case that the resistance is usually shifted far outside the range of good matching, in which it would come close to the conjugated complex resistance of the input circuit. This can be reduced by means of the circuit arrangement according to the invention, so that external influences as far as possible do not give rise to such altered power matching between antenna and input stage which is difficult to estimate, as a result of which any possible adverse effects on the available energy for the transponder function can be avoided.

By means of a circuit arrangement according to the invention, it is also possible to reduce negative effects which may arise in conventional circuit arrangements on account of tolerances of the components used. These tolerances are also used to determine the practical approximation to the power matching between the antenna and the input stage from the tolerances of the components used. In the UHF and GHz range in particular, the tolerances of the integrated components have a considerable effect on function, since in these cases the bandwidths used are narrower in relation to the transmission frequency. At low frequencies, the tolerances of the external components are usually critical. Without any compensating measures, integrated passive components such as coils and capacitors exhibit manufacturing tolerances of up to a few percent of their nominal value. Compensation of the tolerances on the circuit could be carried out electrically or by laser manipulation for example during the chip test when produced by a photolithographic/chemical process. However, this means that the required circuit and the overall manufacturing process are much more complicated. Such compensation, which can be achieved economically in transponders only in exceptional cases, can be avoided in the case of a transponder in combination with a circuit arrangement according to the invention.

The effects of other instances of small undesirable production spread can also be avoided or at least reduced by means of a circuit arrangement according to the invention. A further source of smaller but also undesirable production spread lies in guiding the connections and mounting the antenna terminals and also positioning the circuit on an antenna carrier. If use is made of very small antennas and/or high frequencies, the effect of this production spread rises. To control the manufacturing tolerances, use can again be made of a circuit arrangement according to one example of embodiment of the invention, in which, instead of additional compensation during production of the transponder, automatic matching is carried out during operation.

Furthermore, by means of a circuit arrangement according to the invention, it is possible to use integrated components, in particular coils and capacitors, which are of higher quality. By means of modem semiconductor processes, it has recently become possible to reduce the power losses of very high-frequency signals on the circuit. These losses were previously caused by parasitic substrate capacitances when using a customary (e.g. conductive) carrier substrate. If high-impedance materials are used for this substrate or if the conventional substrate is removed by measures after chip production, the parasitic losses are largely avoided. For integrated high-frequency components (in particular coils, capacitors), this means that the quality thereof rises. By way of example, in the case of integrated coils, a quality that is improved by a factor of three to ten can be achieved by omitting the substrate losses. However, the increase in quality of the components is associated with a reduction in the bandwidths for the resonant circuit parts (such as matching circuits, resonant circuits or filters). This means that the transponder input stages, which exhibit low losses in the desired manner, are more sensitive to environmental influences and manufacturing tolerances, since the efficiency is sufficient only in a relatively narrow frequency range. However, on account of the automatic tuning, a circuit arrangement according to the invention helps to better control narrow-band input stages.

In the case of a circuit arrangement according to the invention, it is also possible to design antennas (coils) as loop antennas, which are less sensitive to environmental influences since they predominantly use the magnetic component of the field. If a number of windings are used, they are also usually more compact than dipoles of equal efficiency, and this is advantageous for many applications. However, loop antennas are rarely used in conventional transponders in the UHF and GHz range since the customary input circuits are not suitable for this. However, according to the invention, it is also possible for loop antennas to be used in a simpler manner for very high frequencies.

The circuit arrangement according to one example of embodiment of the invention makes it possible for transponders at high operating frequencies to react less sensitively to environmental influences. Furthermore, the transponders can be manufactured without particular limitations to the permitted tolerances. This applies all the more so the higher the component quality (due to reduced losses) when produced using some modern semiconductor processes and the narrower the ranges of good efficiency.

The basic concept of the invention can be considered to be that a circuit arrangement is provided which achieves an improved and insensitive supply of energy to a transponder in that sufficient power matching of transponder input and coils (antennas) is ensured in a substantially constant manner. To this end, resonant properties of the input circuit are tuned by means of a control circuit.

By forming two resonators which can be tuned largely independently of one another, an improved control possibility for the matching of the circuit arrangement is provided. Furthermore, as a result, the reliability and/or fail-safe performance of the circuit arrangement are improved since it is possible to supply the control circuit with an operating voltage which is provided by one resonator while the second resonator is being controlled, that is to say tuned. Even if circuits with a very low minimum voltage and a very low energy requirement are selected here, it may be necessary that this minimum voltage is present continuously during the control process. Only very short voltage breaks can be bridged over by buffer capacitors. This supply of energy to the control circuit can be provided by the comparatively better matched resonator on its own. Preferably, at least the resonator which has a lower output voltage is tuned.

Further embodiments emerge from the features of the dependent claims.

Hereinbelow, further embodiments of the circuit arrangement will be described, wherein embodiments which are described in connection with the circuit arrangement also apply in respect of the method for operating a control circuit for a circuit arrangement.

The circuit arrangement furthermore comprises a rectifier circuit, wherein the rectifier circuit is connected between the input circuit and the control circuit.

By means of such a rectifier circuit, it is possible to convert high-frequency AC voltages, which are provided by the resonators, into a DC voltage which can be used by a connected electronic circuit, e.g. a digital part of a transponder. In particular, the control circuit may be designed in such a way that it can be supplied with the first output voltage and/or second output voltage.

According to another example of embodiment, the circuit arrangement furthermore comprises a primary coil, wherein the primary coil is connected upstream of the input circuit in such a way that an essentially inductive coupling is formed between the primary coil and the first coil and/or second coil.

The use of an upstream primary coil or primary antenna, which is known as a booster antenna, may be particularly advantageous for operating the circuit arrangement. A primary antenna here is to be understood to mean an antenna which has a good coupling to the alternating field of a base station and which inductively transmits the energy received there, in a concentrated manner, to the secondary coils on the transponder, that is to say the first and second coils of the circuit arrangement. As a result, it is possible to establish a particularly good coupling of the circuit arrangement to the alternating field of the base station. The resonant properties which are precisely adjusted to one another that are required for this can be achieved in a particularly efficient manner by providing a primary coil in a circuit arrangement.

The inductive coupling directly in the circuit also has the advantage that electrical terminals of the circuit (e.g. bond wires and pads) are omitted. As a result, the chip mounting costs are reduced and the reliability is increased. Another advantage of the inductive coupling is that good galvanic insulation is obtained, as a result of which there are better protective properties against electrostatic discharges (ESDs). A DC voltage crossover can be reduced or avoided and the low frequency components which contain most of the energy in the ESD discharge pulse are poorly transmitted. Much lower discharge voltages are thus transmitted in the circuit in the event of a discharge.

According to a further example of embodiment, the circuit arrangement furthermore comprises a third coil, wherein the third coil is designed in such a way that it can be used to ensure a voltage supply for the control circuit.

One or more further coils, which are secondary coils, provide a separate antenna coupling for the operating voltage supply and for signal coupling and decoupling. For this, different winding ratios of the primary coil to the first and second coil and to the third coil can be selected. By suitably configuring the number of windings of the primary coil with respect to the numbers of windings of the first and second coils on the one hand and with respect to the third coil on the other hand, it is possible to increase the output voltage. As a result, the output voltage of the secondary coils can be selected within a certain range. The supply voltage for a digital part of the transponder (back-end) can be obtained from the output voltage by rectification. During rectification, the threshold voltage of a rectifier diode which is used usually gives rise to a considerable proportion of the losses which occur, since usually low supply voltages are selected. This applies all the more so when a voltage doubler or multiplier circuit is used, since in this case a number of diodes act in series. According to the example of embodiment in which a third coil is provided, by selecting a suitable winding ratio between primary and secondary coils, in particular the third coil, a higher input voltage is possible upstream of the rectification, and this reduces the loss at the diodes. However, an increased loss occurs on account of the higher supply voltage. Furthermore, according to this example of embodiment, circuit variants other than the customary voltage doubler circuits with two diodes may be possible, since at higher voltages less account has to be taken of the diode losses which occur.

According to another example of embodiment, the circuit arrangement furthermore comprises additional electronic components, wherein the additional electronic components are designed in such a way that they can be supplied with the first output voltage and/or second output voltage.

According to another example of embodiment, the first coil and/or the second coil and/or the primary coil is/are formed as a single loop with just one complete or one partially complete winding.

In other words, each coil which is provided in the circuit arrangement may be designed as a single loop, that is to say as a coil with at most one complete or partially complete winding. However, each coil may also be designed as a coil which has a plurality of windings. Furthermore, the individual coils may also be designed differently, for example the first coil may have a single winding, the primary coil may have a partial winding and the second coil may have a plurality of complete windings.

The control circuit is designed in such a way that the first output voltage and/or the second output voltage can be fed to the input side of the control circuit. The control circuit is furthermore designed in such a way that the control circuit can be used to provide a first tuning voltage for the first varactor and/or a second tuning voltage for the second varactor.

By providing a control circuit which is designed in such a way that one or both tuning voltages, or all tuning voltages in the case where more than two resonators are provided, can be evaluated, a circuit arrangement is provided whereby the circuit arrangement can be controlled in a particularly efficient manner by the output voltages of resonators.

According to another example of embodiment, the control circuit comprises a comparison circuit, wherein the comparison circuit is designed in such a way that the comparison circuit can be used to compare the first output voltage and the second output voltage with one another and/or wherein the comparison circuit is designed in such a way that the comparison circuit can be used to compare the first tuning voltage and the second tuning voltage with one another.

Providing a comparison circuit for comparing output voltages and/or tuning voltages means that a circuit of particularly simple design is provided for tuning the resonators. Such a comparison circuit can be particularly simple in terms of circuit technology.

According to another example of embodiment, the control circuit furthermore comprises a plurality of integrative elements and a decision network, which decision network comprises a first output terminal and a second output terminal. Furthermore, the first output terminal and the second output terminal are connected to the plurality of integrative elements. The decision network may be designed in such a way that, at any point in time, a signal is present at a maximum of one output terminal. The integrative elements may have positive and negative inputs, to which output terminals of the decision network can be connected. In particular, two integrative elements may be provided. The decision network may in particular comprise four AND gates.

According to one refinement of an example of embodiment, the integrative elements are designed in such a way that they can be used to provide the tuning voltages.

According to an additional example of embodiment, the decision network is designed in such a way that it can be used to decide which tuning voltage is varied by a predefinable amount. In particular, the predefinable amount may be a small amount, that is to say an amount which is small compared to the overall tuning voltage currently present.

In other words, the comparison circuit in the circuit arrangement may be designed in such a way that the first output voltage and the second output voltage can be compared and that the first tuning voltage and the second tuning voltage can be compared, and the decision network is designed in such a way that it can be used to determine, based on the results of the comparisons, which of the tuning voltages is varied by a small amount at a given time.

According to one example of embodiment, the primary coil at least partially surrounds the first coil and/or the second coil. In other words, this means that the primary coil, that is to say the winding thereof, surrounds an area within which the first coil and/or the second coil is arranged.

According to another example of embodiment, the circuit arrangement furthermore comprises a depression, wherein the first coil and/or the second coil is/are arranged in the depression. In particular, the depression may be completely or at least partially surrounded by the primary coil. The depression may for example be a trough, a blind hole or the like.

According to another example of embodiment of the circuit arrangement, the first coil and the second coil are arranged at least partially on top of one another.

In particular, the first coil and the second coil may be arranged at a predefined distance from one another. The distance is preferably selected to be small. The distance is preferably selected to be as small as possible in terms of the production technology.

According to another example of embodiment, the first coil surrounds a first surface area which has a first size and the second coil surrounds a second surface area which has a second size. Furthermore, the first surface area and the second surface area overlap in a third surface area which has a third size. In particular, the size of the third surface area may be essentially both half as large as the size of the first surface area and the size of the second surface area.

According to another example of embodiment, the first coil is designed in such a way that it generates a first magnetic flux in the third surface area and the second coil is designed in such a way that it generates a second magnetic flux in the third surface area. The first coil and the second coil are furthermore designed in such a way that the first magnetic flux and the second magnetic flux essentially reinforce one another in the third surface area and essentially cancel one another out outside the third surface area. In particular, the first magnetic flux and the second magnetic flux may have the same direction in the third surface area and have an opposite direction outside the third surface area.

By virtue of such a configuration, it is possible for an inductive coupling between the first coil and the second coil to be reduced.

In other words, the first and second coil (antenna coils or secondary coils) may lie at least partially on top of one another and at a small distance from one another on the circuit, wherein the enclosed areas of these coils overlap one another over approximately half their size. The components of the magnetic fluxes of the two current-carrying coils may have the same direction in the overlapping surface area, while the components of the magnetic fluxes of the two current-carrying coils have opposite directions in the non-overlapping surface area. As a result, it is possible for the fluxes to largely cancel one another out in the non-overlapping surface area, as a result of which an inductive coupling of the coils to one another can be reduced by this effect.

According to an additional example of embodiment, the control circuit is designed in such a way that, in terms of its temporal response, it cannot be significantly affected by temporary signal changes.

In other words, the control circuit, on account of its relatively slow temporal response, is not significantly affected by the temporary signal changes caused by modulations of the antenna voltage, which modulations are carried out for data transmission.

According to another example of embodiment, the circuit arrangement furthermore comprises a plurality of additional coils, wherein at least one of the additional coils is designed to be integral with the circuit arrangement. Furthermore, the circuit arrangement is designed in such a way that it can be used to output a transmission signal, wherein at least one of the plurality of additional coils is designed in such a way that the transmission signal can be transmitted inductively to the first coil and/or the second coil. In particular, the first coil and/or the second coil may also be designed to be integral with the other part of the circuit arrangement.

In other words, the circuit arrangement additionally outputs a transmission signal, wherein this signal is likewise forwarded to the antenna by inductively coupled coils and wherein coils are present on the circuit arrangement, that is to say for example on a chip or carrier on which the circuit arrangement is formed.

According to another example of embodiment, the first capacitor and/or the second capacitor are connected in parallel or in series with the first coil and/or the second coil.

Hereinbelow, further embodiments of the method for operating a control circuit for a circuit arrangement will be described, wherein embodiments which are described in connection with the method for operating a control circuit for a circuit arrangement also apply in respect of the circuit arrangement.

According to the invention, the second capacitor of the circuit arrangement is furthermore designed as a varactor, and the method furthermore comprises evaluating a second output voltage of the second resonator by means of the control circuit. Furthermore, the first varactor is controlled such that the first output voltage is increased and/or the second varactor is controlled such that the second output voltage is increased. In particular, the first output voltage and/or the second output voltage is maximized. The control process may furthermore also be carried out in such a way that a sum voltage, that is to say the sum of the first output voltage and of the second output voltage, is increased and/or maximized.

According to another example of embodiment, at a given point in time, either the first varactor or the second varactor is controlled or adjusted. This means that, at a given point in time, only one varactor is controlled, that is to say the value of its capacitance is changed, whereas the other varactor, or all the other varactors in the case of more than two resonators with varactors, have an unchanged value of its capacitance or their capacitances. However, the individual varactors may preferably be controlled, that is to say have their capacitance changed, one after the other.

According to the invention, the first output voltage and the second output voltage are compared with one another. In the case of more than two resonators which each provide an output voltage, preferably all the output voltages are compared with one another.

According to the invention, a first tuning voltage is generated, by means of which the first varactor is controlled.

Furthermore, a second tuning voltage is generated, by means of which the second varactor is controlled. In particular, the first tuning voltage and the second tuning voltage are compared with one another.

According to the invention, it is determined, as a function of the comparison of the tuning voltages and/or the comparison of the output voltages, whether the first tuning voltage or the second tuning voltage is controlled, that is to say which of the two tuning voltages is controlled or adjusted. Preferably, the tuning voltage of the resonator which has a low output voltage is controlled.

According to the invention, the first output voltage and/or the second output voltage is rectified. Furthermore, the first tuning voltage may be varied such that a resonant frequency of the first resonator is increased if the second tuning voltage is greater than the first tuning voltage and the second output voltage is greater in absolute terms than the first output voltage. Furthermore, the second tuning voltage may be varied such that a resonant frequency of the second resonator is increased if the first tuning voltage is greater than the second tuning voltage and the first output voltage is greater in absolute terms than the second output voltage. Furthermore, the first tuning voltage may be varied such that a resonant frequency of the first resonator is reduced if the first tuning voltage is greater than the second tuning voltage and the second output voltage is greater in absolute terms than the first output voltage. Furthermore, the second tuning voltage may be varied such that a resonant frequency of the second resonator is reduced if the second tuning voltage is greater than the first tuning voltage and the first output voltage is greater in absolute terms than the second output voltage.

In other words, the method of this example of embodiment can also be described by the following features. The method is **characterized in that** two antenna coils L1 and L2 are present on the circuit, from which two output voltages U1 and U2 are obtained by rectification and the connected capacitors are tuned by the tuning voltages Uc1 and Uc2. An increased first tuning voltage Uc1 may mean that the resonant frequency of the associated resonator consisting of first secondary coil L1 and connected variable capacitor is increased. The same relationship as before may also be obtained in respect of the second tuning voltage Uc2 and the second secondary coil L2. Furthermore, the output of the decision network which gives rise to the increase in the first tuning voltage Uc 1 becomes active when the second tuning voltage Uc2 is greater than the first tuning voltage Uc 1 and the second output voltage U2 is greater in absolute terms than the first output voltage U1. Furthermore, the output of the decision network which gives rise to the increase in the second tuning voltage Uc2 becomes active when the first tuning voltage Uc1 is greater than the second tuning voltage Uc2 and the first output voltage U1 is greater in absolute terms than the second output voltage U2. Furthermore, the output of the decision network which gives rise to the reduction in the first tuning voltage Uc1 becomes active when the first tuning voltage Uc1 is greater than the second tuning voltage Uc2 and the second output voltage U2 is greater in absolute terms than the first output voltage U1. Furthermore, the output of the decision network which gives rise to the reduction in the second tuning voltage Uc2 becomes active when the second tuning voltage Uc2 is greater than the first tuning voltage Uc1 and the first output voltage U1 is greater in absolute terms than the second output voltage U2.

As an example, the method can also be carried out with inversion of both the input decision and the output effect of the control process, in which an increased first tuning voltage Uc1 reduces the resonant frequency of the associated circuit part consisting of first secondary coil L1 and connected variable capacitor, and wherein the same relationship also applies in respect of the second tuning voltage Uc2 and the second secondary coil L2. Furthermore, the output of the decision network which gives rise to the reduction in the first tuning voltage Uc1 becomes active when the second tuning voltage Uc2 is greater than the first tuning voltage Uc1 and the second output voltage U2 is greater in absolute terms than the first output voltage U1. Furthermore, the output of the decision network which gives rise to the reduction in the second tuning voltage Uc2 becomes active when the first tuning voltage Uc1 is greater than the second tuning voltage Uc2 and the first output voltage U1 is greater in absolute terms than the second output voltage U2. Furthermore, the output of the decision network which gives rise to the increase in the first tuning voltage Uc1 becomes active when the first tuning voltage Uc1 is greater than the second tuning voltage Uc2 and the second output voltage U2 is greater in absolute terms than the first output voltage U1. Furthermore, the output of the decision network which gives rise to the increase in the second tuning voltage Uc2 becomes active when the second tuning voltage Uc2 is greater than the first tuning voltage Uc1 and the first output voltage U1 is greater in absolute terms than the second output voltage U2.

A provision of tuning voltages controlled in this way gives rise to a particularly efficient method for increasing an overall output voltage.

According to another example of embodiment, a method furthermore comprises deactivating the control circuit for a predefinable period of time. Such a deactivation of the control circuit may be carried out in particular for the period of time in which the circuit arrangement is transmitting signals. If a circuit arrangement is combined with a transponder, for example, this is the period of time in which the transponder is transmitting signals.

According to one example of embodiment of the method, the deactivation takes place while the circuit arrangement is receiving data and/or while the circuit arrangement is transmitting data and/or when a predefinable sum voltage consisting of first output voltage and second output voltage is reached. The deactivation may also take place with a predefinable periodicity.

In other words, in a method according to one example of embodiment, the control circuit may be deactivated by its downstream circuit parts, for example a transponder, for the period of time in which signals are being transmitted from the circuit. Furthermore, following the receipt of relevant data which is detected by the circuit arrangement and/or transponder, the control circuit may be deactivated until the end of the data receiving operation. Furthermore, the control circuit may be deactivated after reaching a sufficient voltage and/or for a predefined period of time periodically.

Such a deactivation may be particularly advantageous in the case where the circuit arrangement is combined with a transponder or is formed on such a transponder which transmits signals. Preferably, the deactivation is carried out during the period of time in which the transponder is transmitting such signals. In another example of embodiment, the deactivation may also be carried out when the transponder is receiving signals, in particular data signals, wherein the control of the resonators, that is to say of resonant frequencies of the resonators, is then preferably deactivated for the full time period of data receipt.

According to the invention, it is possible to tune to a receiving frequency which is not precisely known from the point of view of the transponder. The presetting of resonances to this receiving frequency during production is subject to considerable tolerances. A highly precise reference in the transponder can thus rarely be realized. However, according to one example of embodiment - even in the event of an unfavorable initial situation regarding the frequency-determining parameters - the resonant frequencies of the resonant circuits can be approximated in steps to the received carrier frequencies from the base station. According to the invention, it is possible to improve the reliability of an RFID_ID system by increasing the efficiency of the energy supply of the transponder. An increased range is also obtained by way of a secondary effect. One significant use example of a circuit arrangement according to one example of embodiment of the invention relates in particular to applications in the GHz range.

A method for operating a control circuit of a circuit arrangement can in this case be carried out by means of a processor which in particular forms part of the circuit arrangement. It is also possible for a program to be stored on a computer-readable medium, which program, when it is executed on a processor, is designed to control a method, wherein the method is a method according to one example of embodiment of the invention. Moreover, a program element may be adapted such that, when it is executed on a processor, it controls a method, wherein the method is a method according to one example of embodiment of the invention. The circuit arrangement may also comprise a processor which is designed in such a way that control of the circuit arrangement can be carried out at least partially. The method may be implemented in full or in part as a software solution.

It should be pointed out that features or steps which have been described with reference to one of the above examples of embodiments or with reference to one of the above aspects can also be used in combination with other features or steps of other examples of embodiments or aspects described above.

The invention will be further described with reference to examples of embodiments shown in the drawings to which, however, the invention is not restricted.

| | |
|---|---|
| Fig. 1 | shows a schematic representation of a front-end circuit with controllable parallel capacitors, according to one example of embodiment of the invention; |
| Fig. 2 | shows a schematic representation of a front-end circuit with controllable series capacitors, according to one example; |
| Fig. 3 | shows a schematic representation of a front-end circuit with an auxiliary circuit for supplying the control circuit, according to one example of embodiment of the invention; |
| Fig. 4 | shows a schematic representation of a functional block circuit diagram of a control circuit, according to one example of embodiment of the invention; |
| Fig. 5 | shows a schematic representation of a front-end circuit with a primary antenna, according to a fourth example of embodiment of the invention; |
| Fig. 6 | schematically shows different situations in respect of a control process, according to one example of embodiment of the invention; |
| Fig. 7 | schematically shows two tuning voltages in the form of two-dimensional diagrams in the course of a control process, according to one example of embodiment of the invention; |
| Fig. 8 | schematically shows a temporal course of output voltages and tuning voltages of a control circuit arrangement, according to one example of embodiment of the invention; |
| Figs. 9a to 9d | show various schematic arrangements of antenna coils according to examples of embodiments of the invention; |
| Fig. 10 | shows a schematic representation of antenna coils which lie on top of one another on a chip, according to one example of embodiment of the invention; |
| Figs. 11a and 11b | show a schematic representation of an inductive coupling, according to one example of embodiment of the invention; |
| Figs. 12a and 12b | show a schematic representation of a transponder with a dipole antenna, according to one example of embodiment of the invention; |

Figs. 13a and 13b    show a schematic representation of a transponder with a loop antenna, according to one example of embodiment of the invention;

Figs. 14a and 14b    show a schematic representation of a dipole antenna with a closed primary coil, according to one example of embodiment of the invention;

Figs. 15a and 15b    show a schematic representation of a loop antenna with a closed primary coil, according to one example of embodiment of the invention;

Figs. 16a and 16b    show a schematic representation of a primary coil with multiple windings, according to one example of embodiment of the invention;

Figs. 17a and 17b    show a schematic representation of a primary coil with a partial winding, according to one example of embodiment of the invention; and

Figs. 18a and 18b    show a schematic representation of a primary coil which is arranged around a depression for receiving a chip, according to one example of embodiment of the invention.

Hereinbelow, the invention will be described in greater detail on the basis of examples of embodiments and with reference to the figures, in which identical or similar elements are provided with identical or similar references.

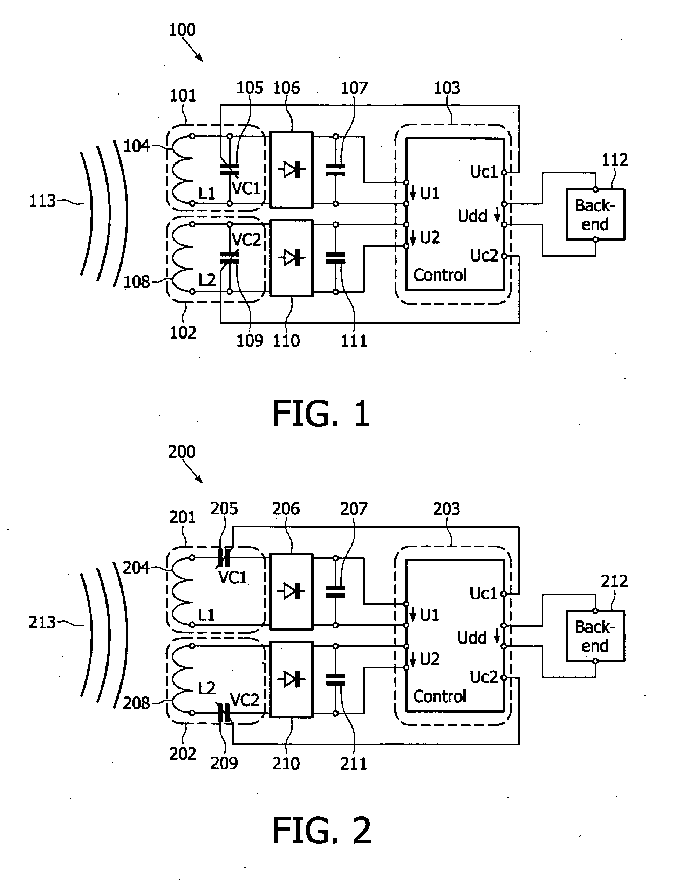

Fig. 1 schematically shows, in the form of a block diagram, an example of a circuit arrangement 100 for a transponder having a design according to the invention. In this figure, the front-end circuit is shown in detail and the back-end circuit is shown merely as a block.

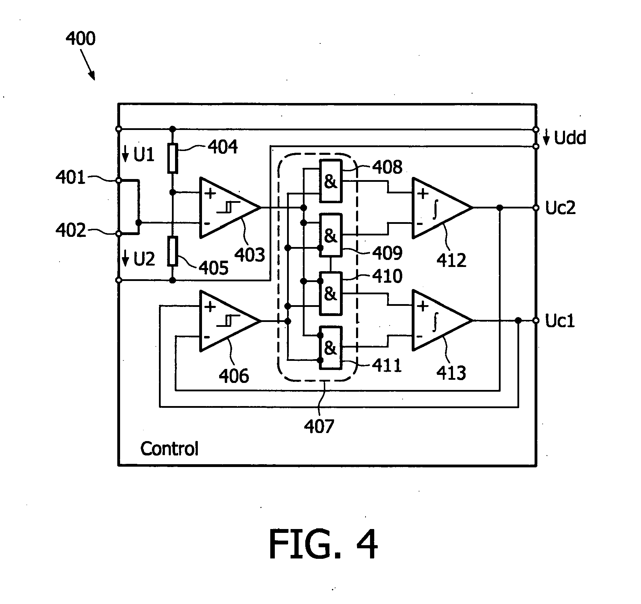

The circuit arrangement 100 comprises a first resonator 101, a second resonator 102, a control circuit 103 and a back-end circuit 112. The first resonator 101 comprises a first coil 104 and a first variable capacitor (varactor) 105. The first resonator 101 is coupled to a first rectifier circuit 106 which is in turn coupled to a first buffer capacitor 107. The second resonator 102 comprises a second coil 108 and a second variable capacitor (varactor) 109. The second resonator 102 is coupled to a second rectifier circuit 110 which is in turn coupled to a second buffer capacitor 111. The two buffer capacitors are coupled to the control circuit 103, which is shown only schematically as a block diagram. One possible embodiment is shown and explained in greater detail in Fig. 4. The control circuit 103 is in turn coupled to the back-end circuit 112, and is furthermore coupled to the first varactor and the second varactor and provides a tuning voltage for said varactors. One possible back-end circuit may be the digital part for a transponder, for example for an RFID tag, or the circuits connected downstream of the front-end for a wireless sensor or for a remote control. According to the example of embodiment of Fig. 1, the first varactor is connected in parallel with the first coil and the second varactor is connected in parallel with the second coil.

An.energy-supplying alternating field is shown to the left merely in symbolic form by means of the lines 113. The first coil and the second coil (antenna coils), together with a variable capacitor connected in parallel therewith, form two resonators (parallel resonant circuits) as mentioned above. Electrical energy having a high frequency is taken from these resonators and rectified. The rectifier circuit with buffer capacitor supplies the output voltages U1 and U2, which as a sum form the operating voltage Udd. The control circuit (controller), which is denoted Control in Fig. 1, moreover supplies the tuning voltages Uc1 and Uc2. The output voltages of the first and second resonator may in this case be used as a supply voltage for the control circuit and for further circuit parts of the circuit arrangement, for example the back-end circuit.

Fig. 2 schematically shows, in the form of a block diagram, an example of a circuit arrangement 200 for a transponder. In this figure, the front-end circuit is shown in detail and the back-end circuit is shown merely as a block.

The circuit arrangement 200 comprises a first resonator 201, a second resonator 202, a control circuit 203 and a back-end circuit 212. The first resonator 201 comprises a first coil 204 and a first variable capacitor (varactor) 205. The first resonator 201 is coupled to a first rectifier circuit 206 which is in turn coupled to a first buffer capacitor 207. The second resonator 202 comprises a second coil 208 and a second variable capacitor (varactor) 209. The second resonator 202 is coupled to a second rectifier circuit 210 which is in turn coupled to a second buffer capacitor 211. The two buffer capacitors are coupled to the control circuit 203, which is shown only schematically as a block diagram. One possible embodiment is shown and explained in greater detail in Fig. 4. The control circuit 203 is in turn coupled to the back-end circuit 212, and is furthermore coupled to the first varactor and the second varactor and provides a tuning voltage for said varactors. The back-end circuit may for example be the digital part for a transponder. According to the example of embodiment of Fig. 2, the first varactor is connected in series with the first coil and the second varactor is connected in series with the second coil.

An energy-supplying alternating field is shown to the left merely in symbolic form by means of the lines 213. The first coil and the second coil (antenna coils), together with a variable capacitor connected in series therewith, form two resonators (parallel resonant circuits) as mentioned above. Electrical energy having a high frequency is taken from these resonators and rectified. The rectifier circuit with buffer capacitor supplies the output voltages U1 and U2, which as a sum form the operating voltage Udd. The control circuit (controller), which is denoted Control in Fig. 2, moreover supplies the tuning voltages Uc1 and Uc2.

The example shown in Fig. 2 differs from the example of embodiment shown in Fig. 1 by a series connection of the variable capacitors. Usually, in the example of embodiment of Fig. 2, there is a steadily decreasing dependence of the resonant frequency on the tuning voltage, instead of a steadily increasing dependence thereon as in the example of embodiment of Fig. 1. In this case, it would be possible to perform trivial circuit adaptations in the control circuit, e.g. by swapping the polarity of integrative elements of the control circuit.

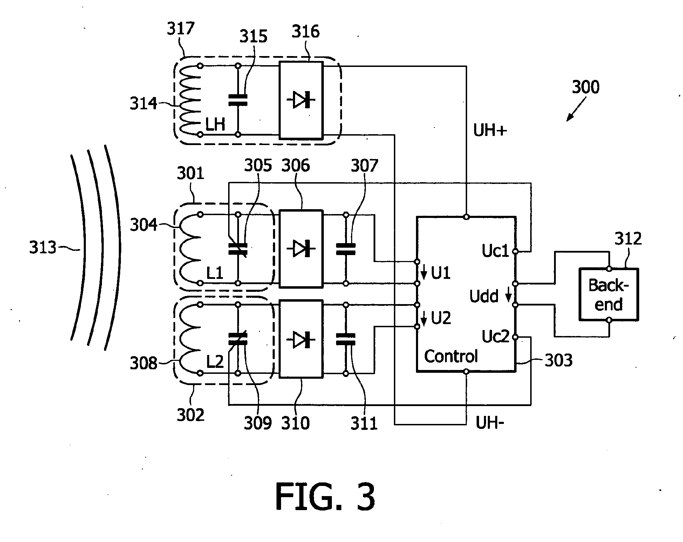

Fig. 3 schematically shows, in the form of a block diagram, an example of a circuit arrangement 300 for a transponder having a design according to the invention, which comprises an additional auxiliary circuit. In this figure, the front-end circuit is shown in detail and the back-end circuit is shown merely as a block.

The circuit arrangement 300 comprises a first resonator 301, a second resonator 302, a control circuit 303 and a back-end circuit 312. The first resonator 301 comprises a first coil 304 and a first variable capacitor (varactor) 305. The first resonator 301 is coupled to a first rectifier circuit 306 which is in turn coupled to a first buffer capacitor 307. The second resonator 302 comprises a second coil 308 and a second variable capacitor (varactor) 309. The second resonator 302 is coupled to a second rectifier circuit 310 which is in turn coupled to a second buffer capacitor 311. The two buffer capacitors are coupled to the control circuit 303, which is shown only schematically as a block diagram. One possible embodiment is shown and explained in greater detail in Fig. 4. The control circuit 303 is in turn coupled to the back-end circuit 312, and is furthermore coupled to the first varactor and the second varactor and provides a tuning voltage for said varactors. One example of a back-end circuit is once again the digital part of a transponder chip. The circuit arrangement 300 furthermore comprises an auxiliary circuit 317 which comprises a third coil 314, a third varactor 315, which together form a third resonator, and a third rectifier circuit 316. According to the example of embodiment of Fig. 3, the first varactor is connected in parallel with the first coil, the second varactor is connected in parallel with the second coil and the third varactor is connected in parallel with the third coil. The auxiliary circuit is coupled to the control circuit 303 in such a way that it can at least partially perform the energy supply function for the control circuit 303.

An energy-supplying alternating field is shown to the left merely in symbolic form by means of the lines 313. The first coil and the second coil (antenna coils), together with a variable capacitor connected in parallel therewith, form two resonators (parallel resonant circuits) as mentioned above. High-frequency AC power, that is to say electrical energy which has a high frequency, is taken from these resonators. The rectifier circuit with buffer capacitor supplies the output voltages U1 and U2, which as a sum form the operating voltage Udd. The control circuit (controller), which is denoted Control in Fig. 3, moreover supplies the tuning voltages Uc1 and Uc2.

Fig. 3 thus shows a front-end circuit with an increased supply voltage (UH+ and UH-) for the control circuit, which is supplied by the auxiliary circuit 317. This auxiliary circuit is specifically adapted to be subjected to load only by the control circuit. By way of example, an increased voltage can be achieved by a high number of windings of the antenna coil LH provided for this purpose. By virtue of this configuration, the relatively economical control circuit can be used very early, that is to say even at very low field strengths.

Fig. 4 shows, in the form of a block diagram, an example of embodiment of a simple control circuit which corresponds in terms of its function to a method according to one example of embodiment of the invention. The control circuit 400 comprises a first input 401 and a second input 402, at which a first output voltage U1 and a second output voltage U2 are provided to the control circuit 400. The control circuit 400 furthermore comprises a first comparator 403, to which the supply voltages U1 and U2 are fed via a resistance chain which comprises two resistors 404 and 405. The first comparator 403 has a small switching hysteresis and compares the output voltages U1 and U2. The resistance chain ensures that the different polarities of the voltages with respect to the comparator ground are taken into account, so that the supply voltage Udd is obtained by a series connection of U1 and U2.

The control circuit 400 furthermore comprises a second comparator 406 with a small switching hysteresis, to which tuning voltages Uc1 and Uc2 are fed, said tuning voltages being supplied from the output of the controller. The two comparator outputs feed into a decision network 407 consisting of four AND gates 408, 409, 410 and 411, which decision network distinguishes between the various situations as described below. In each case, two of the eight situations are combined. At any given point in time, just one of the outputs of the decision network is active. The active output acts on one of two integrative elements 412 and 413, in which the value of the tuning voltages Uc1 and Uc2 is stored.

The integrative elements may store the value permanently or only temporarily. The value may be lost when the supply voltage to the control circuit is lost; it may also be reset cyclically after the expiry of a certain time or a certain data communication. The integrative elements may also be designed such that they lose the value over a relatively long time, wherein the term relatively long time is to be understood to mean a longer time period than the time taken for the value to be built up integratively (so-called leaking integrators).

Through the active output, the respective tuning voltage is increased or reduced in small steps or by means of a relatively slow integration.

Following the general explanations, the control circuit for tuning two antenna coils L1 and L2 will be described in greater detail by way of an example of embodiment.

The following stipulations are made for the model on which the control process is based:

- Each of the two circuit parts forms a resonator consisting of the coils L1 and L2 and the variable capacitors VC1 and VC2. Each resonator has its own resonant frequency f1 and f2 with a considerable increase in voltage which dominates over other influences. This increase means that the functions of the output voltages U1(f) and U2(f) of the rectifiers downstream of the resonators assumes a maximum value at f1 and f2, respectively, that is to say:

$$U1(f1) = U1_{max} \quad \text{and} \quad U2(f2) = U2_{max}$$

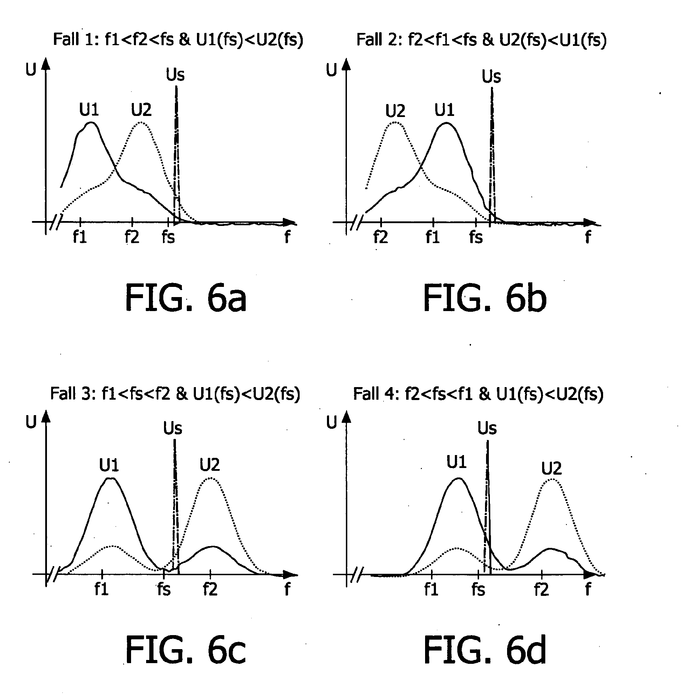

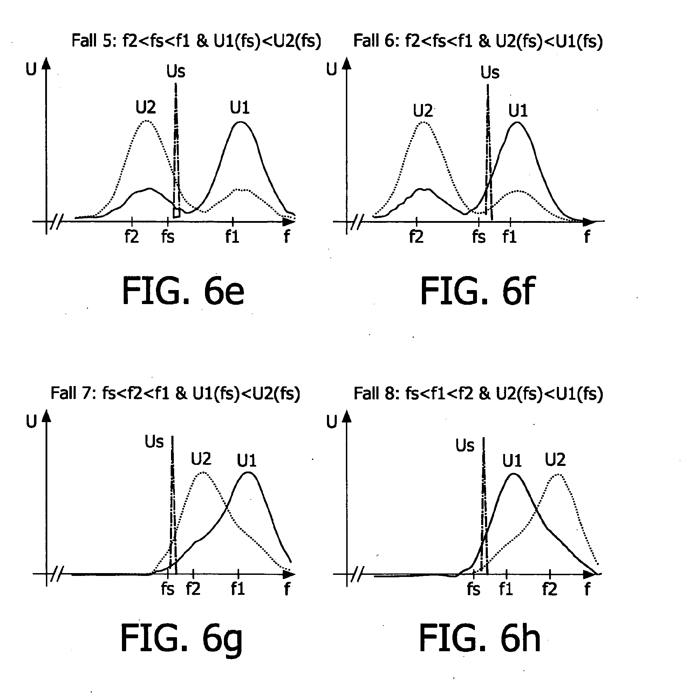

- The side maxima of the voltages U1 and U2, due to couplings to the other resonator and other reasons, lie considerably below these maximum values U1(f1) and U2(f2), since the coupling factors of the antenna coil lie considerably below 1. Approximately equal dimensioning of the resonators is assumed.
- It is assumed that the frequencies f1 and f2 initially differ considerably from the transmission frequency fs of the signal of the base station, that is to say that the resonators are considerably imbalanced. Fig. 6 shows examples of situations of such imbalances, wherein moreover the amplitude Us for the transmission frequency is shown only schematically for illustration purposes.
- Without restricting the general nature of the proposed solution, it is initially assumed that the frequencies f1 and f2 in the region of the control effect depend in a steadily increasing manner on the tuning voltages Uc1 and Uc2 used for control purposes. Since in theory very small integration steps are carried out during the tuning control, even the assumption of a linear relationship for each step would be permitted. The situation of steadily decreasing dependence of f1/f2 on Uc1/Uc2 corresponds merely to an inversion of the control variables.
- There are initially differences between the two resonators consisting of L1 with VC1 and of L2 with VC2; however, these remain very small in the active control range. The coupling factors between the antenna coils to the base station are almost equal but considerably below 1. Usually a smaller coupling is provided between the antenna coils. The maximum values of the voltages U1(f1) and U2(f2) are thus also almost equal for a small control range.
- The optimally tuned situation is described by the position of the resonant frequencies on the transmission frequency of the base station, that is to say:

    desired state: f1=f2=fs

- The control process is aimed at achieving this correspondence. The state is also referred to as the convergence target or desired state. Practical boundary conditions slightly restrict the ability to achieve this target, but this restriction is usually sufficiently small. This includes the minimum threshold values of the differences of the voltages which can be evaluated, e.g. as a result of offset voltages, or physical limitations for U1 and U2 or considerable variations and noise in the voltages.

Following these stipulations, the controller function will now be described:

If the frequencies f1, f2 and fs are ordered according to magnitude, one of eight situations is always obtained (see also Fig. 6). In each of the eight situations, different relationships apply, e.g. f1 <f2<fs, f2<f1 <fs or f1 <fs<f2, etc. The fact that in theory it is also possible for two frequencies to have exactly the same values is of no significance in practice (noise, threshold values of the control system) and for the sake of simplification will not be considered here.

For each of the eight situations, there is in each case a correction direction for the frequencies f1 and f2, in which the desired relationship f1=f2=fs, that is to say the tuned desired state, can be approached. For illustration purposes, these corrections can be presented as very small steps of very small reductions in frequency or increases in frequency. When these steps are carried out, a decision is again taken with regard to the existence of one of the aforementioned situations, and corrections are again carried out. In reality, temporal steps do not need to exist; use may be made of a continuous-action circuit.

For the correction step in the direction of a reduction in frequency, the notation f1-- or f2-- is used. For the correction step in the direction of an increase in frequency, the notation f1++ or f2++ is used. These steps correspond to variations in the tuning voltages represented by the similar notation Uc1-- and Uc2-- or Uc1++ and Uc2++.

However, the frequencies f1 and f2 cannot be determined directly for a simple control circuit. Nevertheless, it is very simple to compare voltages with one another. This is to take place with U1 and U2 and with Uc1 and Uc2. If any offset voltages are initially ignored, and if it is assumed that in practice no voltage values are ever precisely the same, it is very simple to decide whether U1 is lower than U2 or whether Uc1 is lower than Uc2. Using the relationships, a controller can make a decision at its input by means of a comparator. Possible situations are shown in Table 1 below.

Table 1

| Situation | Order of frequencies f1, f2, fs | Decision at controller input | Suitable correction |
|---|---|---|---|
| 1 | f1<f2<fs | U1<U2; Uc1<Uc2 | f1++; f2++ |
| 2 | f2<f1<fs | U2<U1; Uc2<Uc1 | f1++; f2++ |
| 3 | f1<fs<f2 | U1<U2; Uc1<Uc2 | f1++; f2-- |
| 4 | f1<fs<f2 | U2<U1; Uc1<Uc2 | f1++; f2-- |
| 5 | f2<fs<f1 | U1<U2; Uc2<Uc1 | f1--; f2++ |
| 6 | f2<fs<f1 | U2<U1; Uc2<Uc1 | f1--; f2++ |
| 7 | fs<f2<f1 | U1<U2; Uc2<Uc1 | f1--; f2-- |
| 8 | fs<f1<f2 | U2<U1; Uc1<Uc2 | f1--; f2-- |

Ambiguities emerge when the decisions at the controller input are considered more closely:

U1<U2 and Uc1<Uc2 both in situation 1 and in situation 3;
U1<U2 and Uc2<Uc1 both in situation 5 and in situation 7;
U2<U1 and Uc2<Uc1 both in situation 2 and in situation 6;
U2<U1 and Uc1<Uc2 both in situation 4 and in situation 8.

It is thus not possible to distinguish between situation 1 and 3 or situation 5 and 7 or situation 2 and 6 or situation 4 and 8 if only the magnitude relationship between U1 and U2 and between Uc1 and Uc2 is provided as the criterion to be observed. These two situations which cannot be distinguished between in each case are combined as a situation pair, e.g. situation 1 and situation 3 as a situation pair 1,3.

The problem to be dealt with then is how to overcome the ambiguity of the possible corrections in these situation pairs. For example, situation 1 offers the two correction possibilities f1++ and f2++, while situation 3, which cannot be distinguished therefrom, would permit the corrections f1++ and f2--.

By way of a solution, it is proposed to use only those corrections which coincide in ambiguous situation pairs. In the above example of situation 1 and 3 (referred to for short as situation 1,3), this is the correction f1++. On account of the relationship assumed above between the resonant frequency f1 and the tuning frequency Uc1, the frequency correction f1++ is achieved by the voltage correction Uc1++. The controller thus varies just one tuning voltage. The possible situation pairs and the corresponding variations to the tuning voltage are shown in Table 2.

Table 2

| Situation pair | Decision at controller input | Selected correction | Tuning voltage | |
|---|---|---|---|---|
| | | | changed | unchanged |
| 1,3 | U1<U2; Uc1<Uc2 | f1++ | Uc1++ | Uc2 |
| 5,7 | U1<U2; Uc2<Uc1 | f1-- | Uc1-- | Uc2 |
| 2,6 | U2<U1; Uc2<Uc1 | f2++ | Uc2++ | Uc1 |
| 4,8 | U2<U1; Uc1<Uc2 | f2-- | Uc2-- | Uc1 |

The described control process can be implemented in the circuit arrangement which is shown in Figs. 1 to 3 and 5.

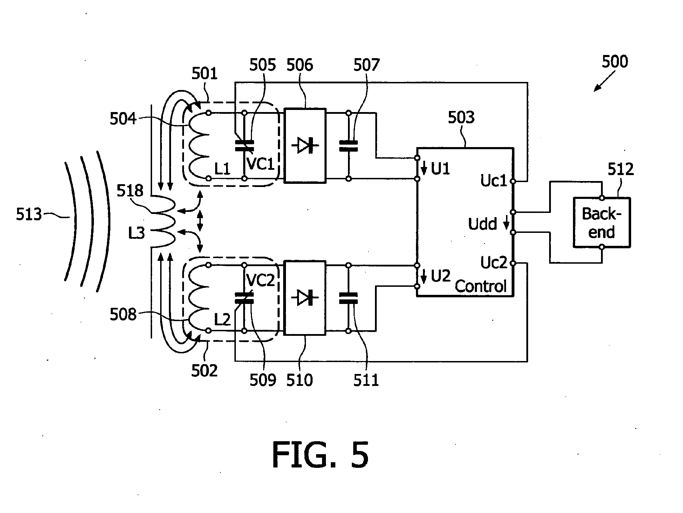

Fig. 5 shows, in the form of a block diagram, an example of a front-end circuit. It differs from Fig. 1 by an upstream primary antenna. In this figure, the front-end circuit is shown in detail and the back-end circuit is shown merely as a block.

The circuit arrangement 500 comprises a first resonator 501, a second resonator 502, a control circuit 503 and a back-end circuit 512. The first resonator 501 comprises a first coil 504 and a first variable capacitor (varactor) 505. The first resonator 501 is coupled to a first rectifier circuit 506 which is in turn coupled to a first buffer capacitor 507. The second resonator 502 comprises a second coil 508 and a second variable capacitor (varactor) 509. The second resonator 502 is coupled to a second rectifier circuit 510 which is in turn coupled to a second buffer capacitor 511. The two buffer capacitors are coupled to the control circuit 503, which is shown only schematically as a block diagram. One possible embodiment is shown and explained in greater detail in Fig. 4. The control circuit 503 is in turn coupled to the back-end circuit 512, and is furthermore coupled to the first varactor and the second varactor and provides a tuning voltage for said varactors. The back-end circuit may for example once again be a transponder. According to the example of embodiment of Fig. 5, the first varactor is connected in parallel with the first coil and the second varactor is connected in parallel with the second coil. A primary coil 518 is connected upstream of the two resonators. The first and second coils L1 and L2 on the circuit are inductively coupled to an external antenna via the primary coil L3. The coils L1 and L2 are then referred to as secondary coils. This coupling and a partial coupling of the antennas to one another is shown by arrows in Fig. 5. The antenna effect is shown by the lines 513.

Fig. 6 shows eight different situations of the model for the described control circuit (see also Fig. 4). In the illustrated situations, the possible order relationships between the resonant frequencies of the two resonators and the signal frequency are detected. The figure thus shows the corresponding embodiments explained in connection with Fig. 4, wherein the voltages U1 and U2 are shown as functions of the frequency. In this figure, f1 and f2 are the respective resonant frequencies of the circuits, that is to say of the first and second resonator, and U1 and U2 respectively reach their maximum at f1 and f2. For orientation purposes, the transmission frequency of a base station is indicated by Us as a peak at fs, that is to say the transmission frequency of a station which transmits a signal to the circuit arrangement or the transponder.

The maxima of U2 and U3 should lie at this peak at the end of the compensation process, since f1 and f2 essentially coincide with fs once compensation has been carried out. In the curves of the output voltage over frequency, which are shown for the eight situations in Fig. 6, the weaker side maxima can also be seen, which arise on account of coupling to the respective other resonator.

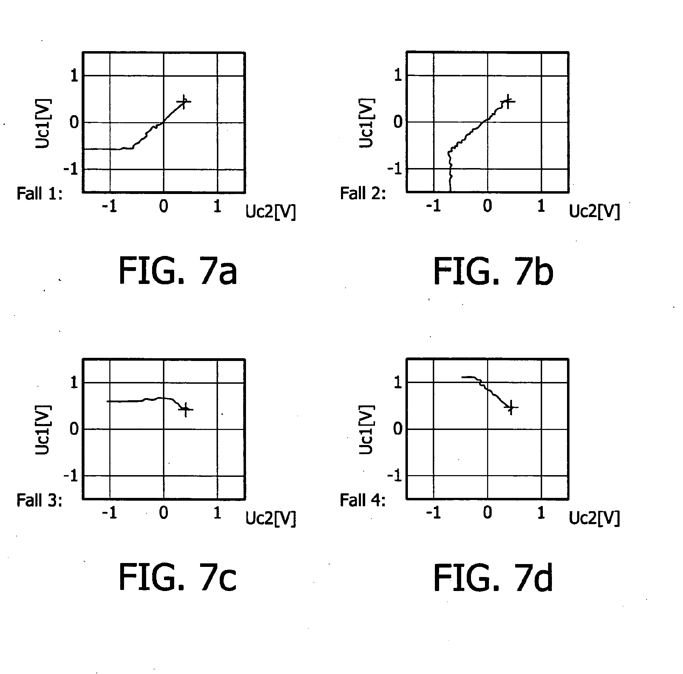

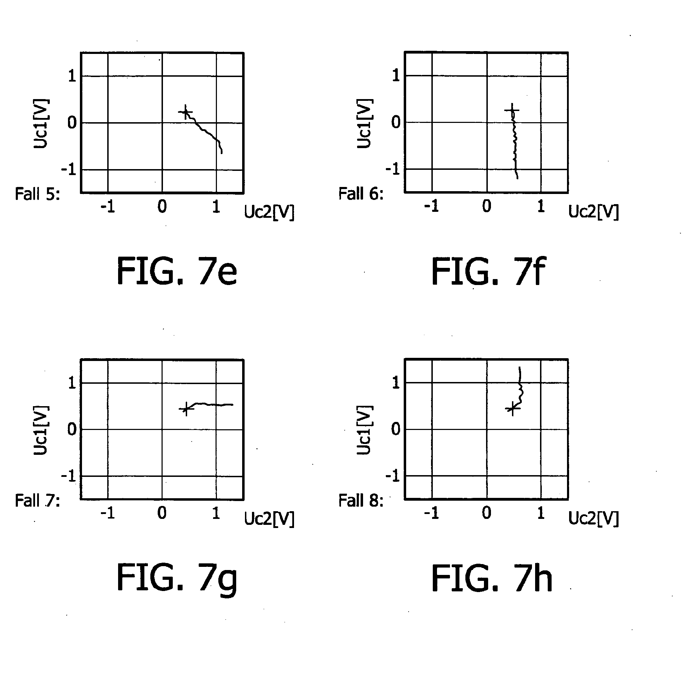

The diagrams of Fig. 7 also relate to the simple control circuit of Fig. 4. Results of simulations for the situations shown in Fig. 6 are shown in graph form, that is to say situation 1 of Fig. 7 relates to situation 1 of Fig. 6, situation 2 of Fig. 7 relates to situation 2 of Fig. 6, etc. In the diagrams shown in an x,y representation, the tuning voltages Uc 1 and Uc2 are shown in the course of a control process. The cross represents the theoretical point of convergence, which the control process is intended to reach from any start state within the intended control range. The states shown in Fig. 6 have been selected as the start of the simulation, that is to say according to all eight situations, by initially placed voltage values for Uc1 and Uc2. Moreover, the same imbalance of the resonators has been defined for each simulation. This corresponds in terms of its effect for example to given manufacturing tolerances, e.g. as different offset values of the capacitors. At the convergence target, initially defined imbalances of the resonators are fully compensated. The values of the control voltages Uc1 and Uc2 required for this are then reached. This explains the difference (offset) of the cross from the coordinate origin. If the convergence target were to lie for example in the coordinate origin, there would be no initial imbalance.

As can be seen from the diagrams in Fig. 7, it is possible to reach the convergence target by means of the control circuit and the control process which are described in connection with Fig. 4.

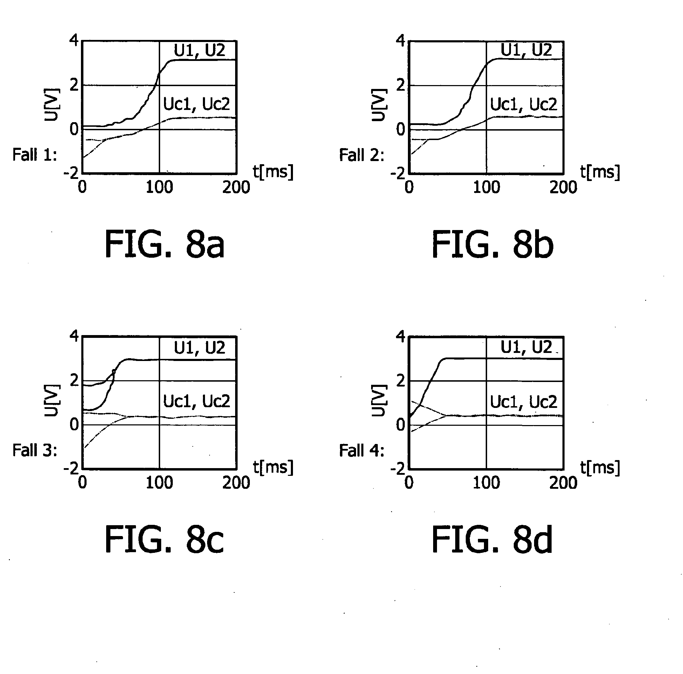

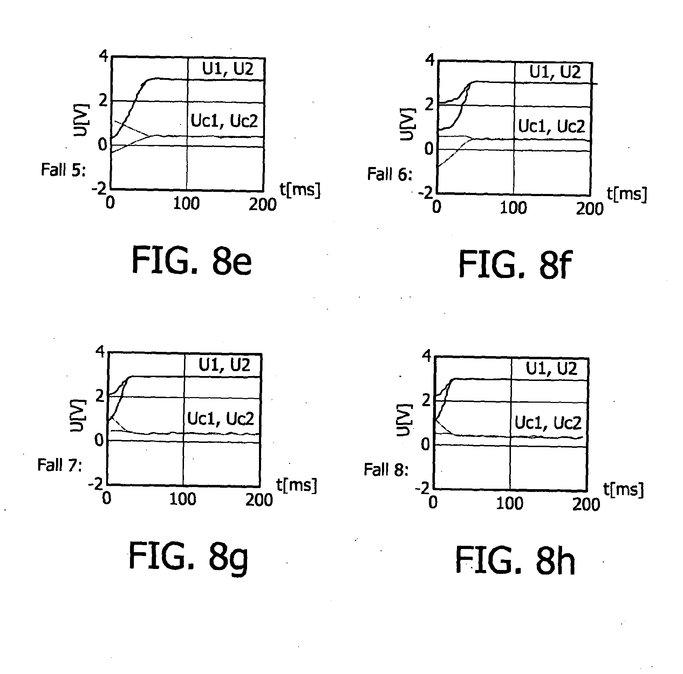

The diagrams in Fig. 8 also relate to the simple control circuit of Fig. 4. Once again, results of simulations for the start states of the eight situations shown in Fig. 6 are shown in graph form. In this case, the temporal course of the output voltages U1 and U2 (top) and of the tuning voltages Uc1 and Uc2 (bottom) are shown in four curves for each situation. It can be seen that voltages U1 and U2 assume approximately the same (maximum) values in the tuned situation and that Uc1 and Uc2 run against constant values which correspond to the predefined offsets of the imbalance. The respective time axis is extended or shortened with the selected integration constant (or the imaginary step size) of the integrative element of the control; in this case, fictitious assumptions have been made which are plausible for many transponder applications. By way of example, a supply voltage to be reached within a time period of 100 ms following switch-on of the base station signal may be defined as a typical application (specification). Other time periods are possible depending on the application, and can be selected within a wide range by the configuration of the integration constants. The good convergence behavior of the adaptation can clearly be seen. The maximum values for U1 and U2 are reached in all eight situations, despite different starting values in each case. It can also be seen in the individual situations of Fig. 8 that U1 and U2 and Uc1 and Uc2 behave the same and assume the same values after a short time, so that the four different lines in each diagram can be seen only at the beginning. By way of example, in Fig. 8f, the individual lines can be seen only up to approximately 50 ms, whereas in Fig. 8g the lines are practically the same after approximately 30 ms and thus run on top of one another.

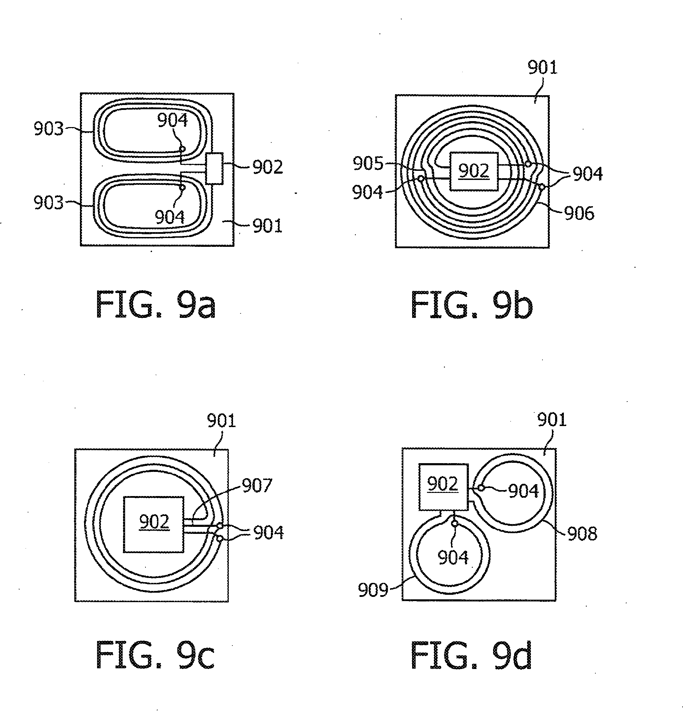

Figs. 9a to 9d show various arrangements of antenna coils 903, that is to say of the first and/or second coil, on a chip or chip crystal. The chip crystal 901 comprises an active area 902 with a transponder circuit. Vias 904 between different conductor planes (metallization layers) of the chip are used to produce crossing conductor tracks.

In Fig. 9a, the two antenna coils 903 are arranged on the chip in such a way that they lie next to the active area. In Fig. 9b, the two antenna coils are arranged around the active area 902. An inner antenna coil 905 on the chip is separated from an outer antenna coil 906 which surrounds it concentrically. Again in Fig. 9c, an antenna coil is arranged around the active area 902. However, it comprises a central tap 907 after some of the windings. This central tap, like the end terminals of the active area 902, is connected to the transponder circuit. In Fig. 9d, two separate antenna coils 908 and 909 are arranged next to the active area 902. The two antenna coils are connected independently of one another to the transponder circuit, which is formed on the active area 902.

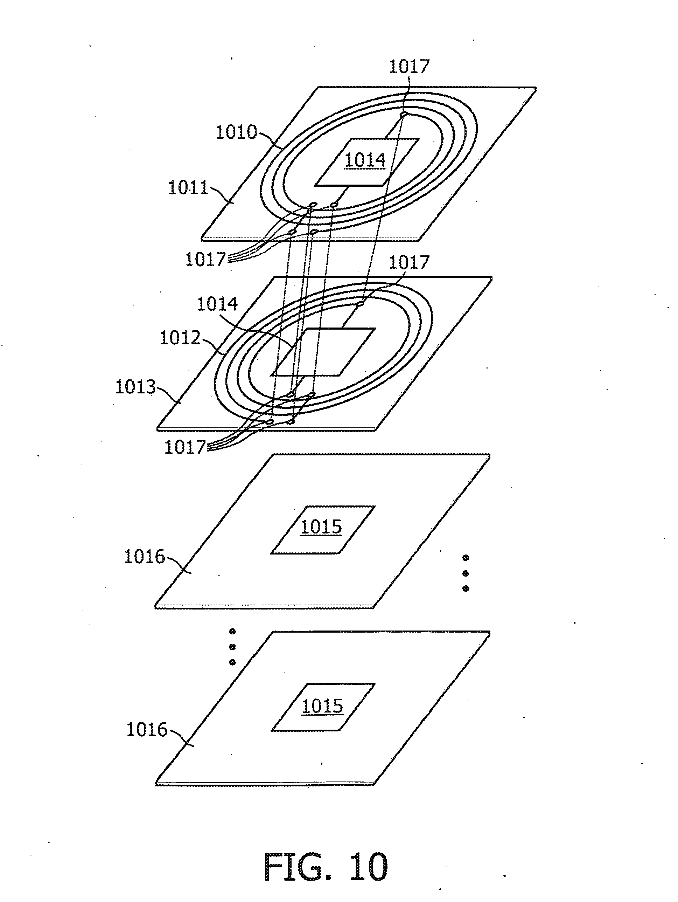

Fig. 10 shows an arrangement of antenna coils lying on top of one another on a chip. The chip is produced in numerous layers having different electrical properties, by means of a lithographic/chemical process. The layers consist of non-conducting, semiconducting and conducting materials (metals). A first antenna coil 1010 is formed from a first metallization plane which is formed on a first non-conducting plane 1011 around an active area 1014 which comprises a transponder. A second antenna coil 1012 is formed from a second metallization plane which is formed on a second non-conducting plane 1013 around the active area. The two antenna coils 1010 and 1012 are etched out of the conducting layers (metallization planes). They are insulated from one another in the vertical direction by the non-conducting layer 1011. Fig. 10 also schematically shows further active parts of the chip structure 1015 in further planes 1016 of the chip structure. Circuits usually contain at least two metal layers, and therefore the coils may also lie on top of one another. Capacitive couplings between the individual coils also act through the relatively thin insulation 1011. The active circuit 1015 usually comprises in its structure almost all the available layers. In the circuit design shown in Fig. 10, note should be taken of the typically stronger coupling of the antenna coils compared to Fig. 9; this may lead to a merging of the resonance curves for U1 and U2, which in some applications may be undesirable. The two coils are coupled to the active area 1014 by means of vias, which are shown as circles 1017 in Fig. 10.

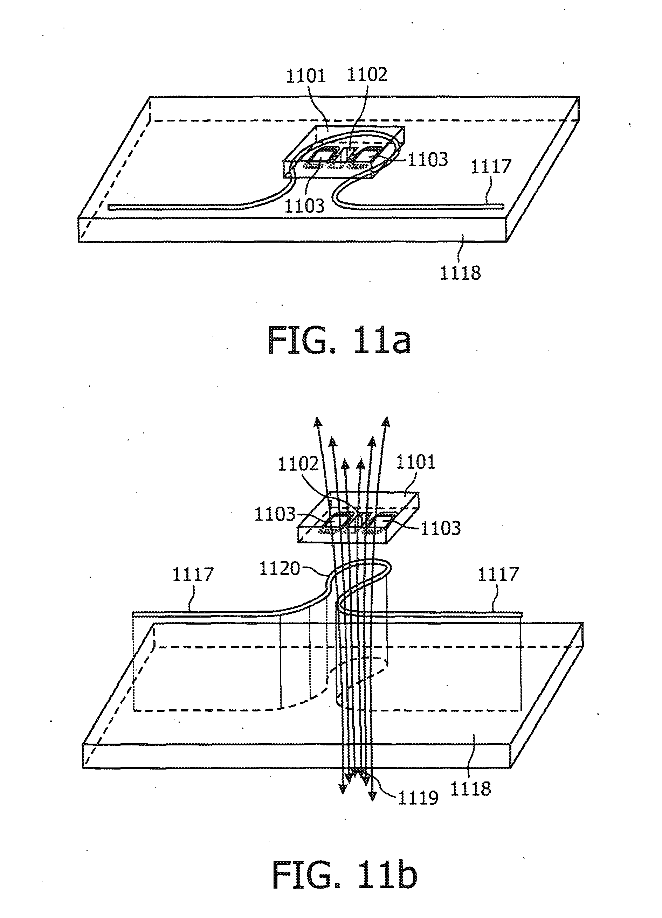

Figs. 11a and 11b show the inductive coupling of energy in the case of a typical transponder structure with an upstream primary antenna.

Fig. 11a shows a flat structure, consisting of a non-conducting carrier material 1118 onto which the primary antenna 1117 (shown here as a dipole) of the transponder has been printed, adhesively bonded or applied by electrodeposition. Located in the center of the dipole antenna is a chip crystal 1101 1 with the active functional transponder circuit in the region of the so-called active area 1102 of the chip crystal. The chip crystal 1102 is adhesively bonded or fixed in some other way to the carrier material. The first coil and the second coil are also shown schematically and are provided with the reference 1103. The two coils are coupled to the transponder circuit.

Fig. 11b shows in a schematic exploded representation the arrangement of Fig. 11a, that is to say of an antenna terminal. Located on the chip crystal 1101 are the active area 1102, which contains the transponder circuit - consisting of a front-end and a back-end - and the two antenna coils 1103 on the upper side of the chip. This upper side of the chip usually faces towards the carrier material 1118 (flip chip). A primary coil 1120, shown here as a loop which is only partially closed, is located below the chip or tightly surrounding the latter. The loop connects two halves of the dipole 1117 which forms the primary antenna. The inductive coupling of the primary coil to the antenna coils is shown schematically by stylized magnetic field lines 1119.

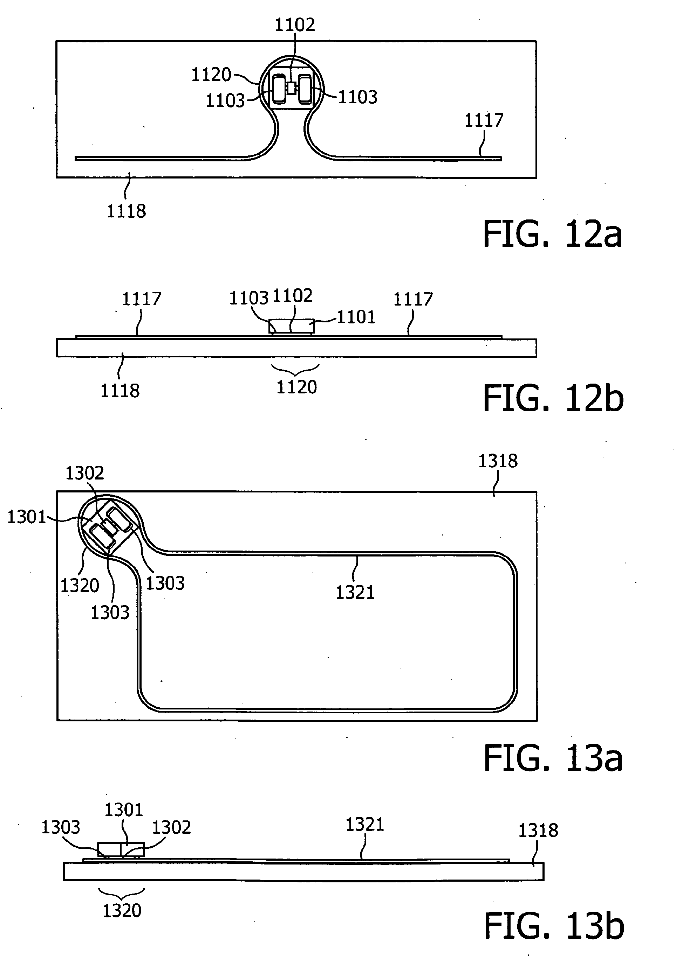

Figs. 12a and 12b show the transponder arrangement of Fig. 11 with a dipole antenna in a plan view (from above) and a side view. The individual components have already been explained with reference to Fig. 11, and in Fig. 12a and Fig. 12b are provided with identical references to those in Fig. 11a and Fig. 11b.

Figs. 13a and 13b show an alternative arrangement for a transponder with a loop antenna in a plan view (from above) and a side view. The approximately rectangular loop antenna 1321 on a carrier material 1318 forms a small loop toward the outside in the left-hand upper corner of Fig. 13a, which loop, as primary coil 1320, almost completely surrounds a chip crystal 1301 comprising an active area 1302 and secondary antenna coils 1303 - referred to as secondary coils for short. In the inner region of a bend, a concentration of the magnetic field lines is obtained, that is to say an increase in the strength of the field in this area. This is a favorable site for arranging the transponder circuit.

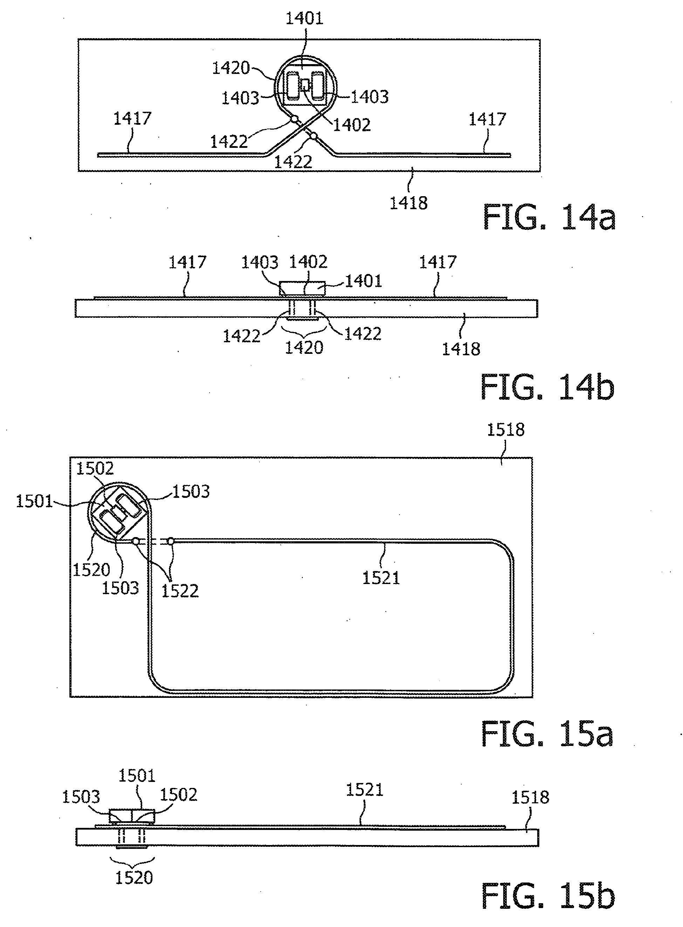

Figs. 14a and 14b show an alternative transponder arrangement with a dipole antenna in a plan view (from above) and a side view. The components have already been explained with reference to Fig. 11 and Fig. 12. 1401 is a chip crystal, 1402 is an active area on which a transponder circuit is formed, 1403 represents two antenna coils, 1417 is a primary antenna in the form of a dipole antenna, and 1420 is a primary coil as part of the primary antenna. Compared to Fig. 12, the vias 1422 have been added, which connect one conductor track from one side of the carrier material 1418 to the conductor track on the other side at certain points. Such vias are known from multilayer printed circuit boards. The conductor guide can be crossed by these vias. As a result, the primary coil 1420 can completely surround the chip 1401.

Figs. 15a and 15b show a transponder arrangement with a loop antenna in a plan view (from above) and a side view. The components have already been explained with reference to Figs. 11 and 13. 1501 is a chip crystal, 1502 is an active area on which a transponder circuit is formed, 1503 represents two antenna coils, and 1520 is a primary coil as part of a primary antenna 1521 which is designed as a loop antenna. The example of embodiment of Fig. 15 differs from the example of embodiment of Fig. 13 in that the primary coil 1520 completely surrounds the chip 1501.

The completely surrounding design of the primary coil, as shown in Figs. 14 and 15, means that an improved coupling factor is achieved compared to incomplete surrounding; however, the complexity of crossing the conductor guide by means of the double-sided board structure and the vias cannot be ignored.

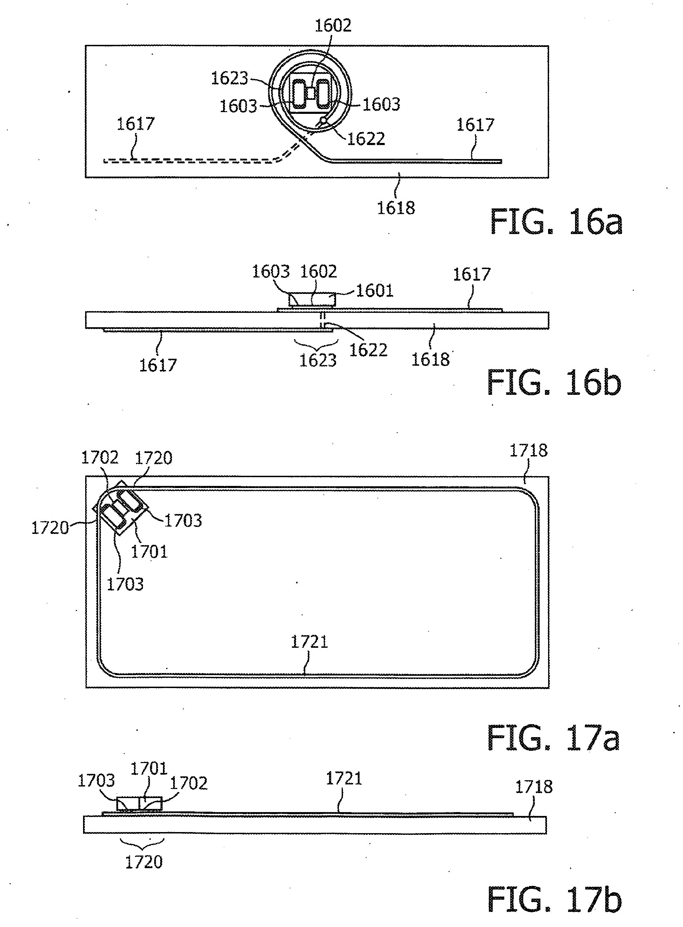

Figs. 16a and 16b show an arrangement comprising a primary coil 1623 with multiple windings in combination with a dipole antenna, the halves of which lie on different sides of the carrier, wherein Fig. 16a shows a plan view and Fig. 16b shows a side view. A via 1622 is also required here. The other components have already been explained with reference to Fig. 14. 1601 is a chip crystal, 1602 is an active area on which a transponder circuit is formed, 1603 represents two antenna coils, 1617 is a primary antenna in the form of a dipole antenna, and 1620 is a primary coil as part of the primary antenna. The individual halves or arms of the dipole antenna 1617 are in this case formed on different sides of the carrier material 1618, as mentioned above. Part of the primary antenna 1618 is thus shown in dashed line in Fig. 16. A number of windings on the primary side, that is to say the primary coil, typically require at least the same number of windings or more on the secondary side, in order that a sufficient supply voltage is available. An improved efficiency can often be achieved by a number of windings. If more windings are formed on the secondary side than on the primary side, an increased supply voltage can be provided.

Figs. 17a and 17b show an arrangement with an almost rectangular loop antenna 1721, in which the primary coil 1720 forms only a segment of a circle around a chip 1701, wherein Fig. 17a shows a plan view and Fig. 17b shows a side view. This segment of a circle, which spans 90 degrees, is formed by a rounded corner of the loop antenna 1721. The structure of the loop antenna is largely unchanged, but a lower coupling factor to the chip is achieved. The other components have already been described above: 1702 is an active area on which a transponder circuit is formed, 1703 represents two secondary coils, and 1718 is a carrier material.

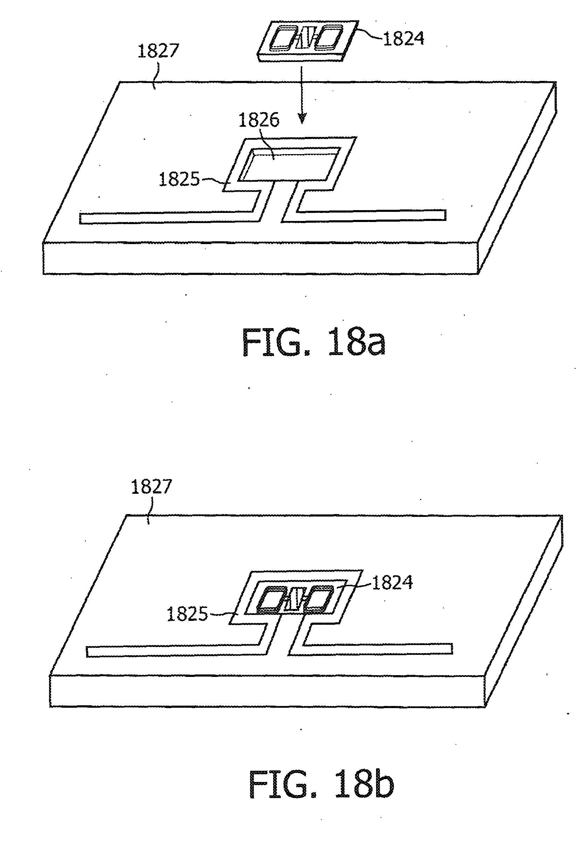

Figs. 18a and 18b show a further example of embodiment, wherein Fig. 18a is an exploded view of Fig. 18b. A chip crystal 1824 is introduced into a suitable blind hole 1826 in a chip carrier 1827. This blind hole is largely surrounded by a primary coil 1825 at the upper edge. The chip crystal 1824 is introduced into the carrier material during production in such a way that the primary coil 1825 on the carrier and the secondary coil on the chip lie almost in one plane. This improves the coupling and reduces manufacturing tolerances compared to a mounting on the carrier surface. Resonance imbalances are also reduced thereby.

In addition, it should be pointed out that the terms "has" and "comprising" do not rule out the presence of other elements or steps and the terms "one" or "a" do not rule out the possibility of there being more than one. Furthermore, it should be pointed out that features or steps which have been described with reference to one of the above examples of embodiments can also be used in combination with other features or steps of other examples of embodiments described above. References in the claims are not to be regarded as presenting a restriction.

## Claims

1. A method for operating a control circuit (103, 203, 303, 400, 503) of a circuit arrangement (100, 200, 300, 500) for a transponder, which circuit arrangement comprises the control circuit and an input circuit, wherein the input circuit comprises a first resonator (101, 201, 301, 501), which first resonator comprises a first coil (104, 204, 304, 504) and a first capacitor (105, 205, 305, 505), and a second resonator (102, 202, 302, 502), which second resonator comprises a second coil (108, 208, 308, 508) and a second capacitor (109, 209, 309, 509), wherein the first capacitor is designed as a first varactor, and wherein the second capacitor is designed as a second varactor, wherein the method comprises:

   generating a first tuning voltage by means of which the first varactor is controlled, generating a second tuning voltage by means of which the second varactor is controlled,
   evaluating a first output voltage (U1) of the first resonator by means of the control circuit;
   evaluating a second output voltage (U2) of the second resonator by means of the control circuit, the two output voltages (U1, U2) being obtained by rectification;
   controlling the first varactor such that the first output voltage is increased and/or controlling the second varactor such that the second output voltage is increased
   wherein the method is **characterised by**:

   varying a first tuning voltage (Uc1) such that a resonant frequency of the first resonator is increased if a second tuning voltage (Uc2) is greater than the first tuning voltage and the second output voltage is greater in absolute terms than the first output voltage and/or
   varying the second tuning voltage such that a resonant frequency of the second resonator is increased if the first tuning voltages is greater than the second tuning voltage and the first output voltage is greater in absolute terms than the second output voltage and/or
   varying the first tuning voltage such that a resonant frequency of the first resonator is reduced if the first tuning voltage is greater than the second tuning voltage and the second output voltage is greater in absolute terms than the first output voltage and/or
   varying the second tuning voltage such that a resonant frequency of the second resonator is reduced if the second tuning voltage is greater than the first tuning voltage and the first output voltage is greater in absolute terms than the second output voltage.

**2.** A method as claimed in claim 1, wherein, at a given point in time, either the first varactor or the second varactor is controlled.

**3.** A method as claimed in any of claims 1 to 3, furthermore comprising the step of deactivating the control circuit for a predefinable period of time.

**4.** A method as claimed in anyone of claims 1 to 3, wherein the deactivation takes place while the circuit arrangement is receiving data and/or while the circuit arrangement is transmitting data and/or when a predefinable sum voltage (Udd) consisting of the first output voltage and the second output voltage is reached and/or when the deactivation takes place with a predefinable periodicity.

**5.** A circuit arrangement (100, 200, 300, 500) for a transponder, which comprises: a control circuit (103, 203, 303, 400, 503) and an input circuit wherein the input circuit comprises: a first resonator (101, 201, 301, 501), which comprises a first coil (104, 204, 304, 504) and a first capacitor (105, 205, 305, 505); and a second resonator (102, 202, 302, 502), which comprises a second coil (108, 208, 308, 508) and a second capacitor (109, 209, 309, 509); wherein the first capacitor is designed as a first varactor; wherein the second capacitor is designed as a second varactor; wherein the first resonator is adapted to provide a first output voltage (U1); wherein the second resonator is adapted to provide a second output voltage (U2); and wherein the control circuit is adapted to control the varactors by providing a first tuning voltage (Uc1) for the first varactor and a second tuning voltage (Uc2) for the second varactor so that a resonant frequency of the corresponding resonator can essentially be set to a transmission frequency such that the output voltage of the corresponding resonator can be increased untie resonant maximum,
wherein said circuit arrangement further comprises a rectifier circuit (106, 110, 206, 506, 210, 306, 310, 510) which is connected between the input circuit and the control circuit and
wherein said circuit arrangement is adapted for performing a method according to claim 1.

**6.** A circuit arrangement as claimed in claim 6, wherein the control circuit is adapted to feed the first output voltage and the second output voltage to the input side of the control circuit.

**7.** A circuit arrangement as claimed claim 7, wherein the control circuit comprises a comparison circuit (403,406), wherein the comparison circuit is adapted to compare the first output voltage and the second output voltage with one another and wherein the comparison circuit is adapted to compare the first tuning voltage and the second tuning voltage with one another.

**8.** A circuit arrangement as claimed in any of claims 7 or 8, wherein the control circuit furthermore comprises a plurality of integrated circuit elements (412, 413) and a decision network (407), which decision network comprises a first output terminal and a second output termimal, wherein the first output terminal and the second output terminal are connected to the integrated circuit elements, and wherein the decision network is designed in such a way that, at any point in time, a signal is present at a maximum of one output terminal,
wherein the integrated circuit elements are adapted to provide the tuning voltages and
wherein the decision network is adapted to decide which tuning voltage is varied by a predefinable amount.

**Patentansprüche**

**1.** Verfahren zum Betreiben einer Steuerschaltung (103, 203, 303, 400, 503) einer Schaltungsanordnung (100, 200, 300, 500) für einen Transponder, welche Schaltungsanordnung die Steuerschaltung und eine Eingangsschaltung aufweist, wobei die Eingangsschaltung einen ersten Resonator (101, 201, 301, 501), welcher erste Resonator eine erste Wicklung (104, 204, 304, 504) und einen ersten Kondensator (105, 205, 305, 505) aufweist, und einen zweiten Resonator (102, 202, 302, 502) aufweist, welcher zweite Resonator eine zweite Wicklung (108, 208, 308, 508) und einen zweiten Kondensator (109, 209, 309, 509) aufweist, wobei der erste Kondensator als ein erster Varaktor gestaltet ist, und wobei der zweite Kondensator als ein zweiter Varaktor gestaltet ist, wobei das Verfahren aufweist:

Erzeugen einer ersten Abgleichspannung durch Mittel, durch die der erste Varaktor gesteuert wird, Erzeugen einer zweiten Abgleichspannung durch Mittel, durch die der zweite Varaktor gesteuert wird,
Auswerten einer ersten Ausgangsspannung (U1) des ersten Resonators durch Mittel der Steuerschaltung;
Auswerten einer zweiten Ausgangsspannung (U2) des zweiten Resonators durch Mittel der Steuerschaltung, wobei die zwei Ausgangsspannungen (U1, U2) durch Gleichrichtung erhalten werden;
Steuern des ersten Varaktors derart, dass die erste Ausgangsspannung erhöht wird, und/oder Steuern des zweiten Varaktors derart, dass die zweite Ausgangsspannung erhöht wird,
wobei das Verfahren **dadurch gekennzeichnet ist** durch:

Variieren der ersten Abgleichspannung (Uc1) derart, dass eine Resonanzfrequenz des ersten Resonators erhöht wird, wenn die zweite Abgleichspannung (Uc2) größer ist als die erste Abgleichspannung und die zweite Ausgangsspannung größer in absoluten Begriffen ist als die erste Ausgangsspannung und/oder
Variieren der zweiten Abgleichspannung derart, dass eine Resonanzfrequenz des zweiten Resonators erhöht wird, wenn die erste Abgleichspannung größer ist als die zweite Abgleichspannung ist und die erste Ausgangsspannung größer in absoluten Begriffen ist als die zweite Ausgangsspannung und/oder
Variieren der ersten Abgleichspannung derart, dass eine Resonanzfrequenz des ersten Resonators reduziert wird, wenn die erste Abgleichspannung größer ist als die zweite Abgleichspannung und die zweite Ausgangsspannung größer in absoluten Begriffen ist als die erste Ausgangsspannung und/oder
Variieren der zweiten Abgleichspannung derart, dass eine Resonanzfrequenz des zweiten Resonators reduziert wird, wenn die zweite Abgleichspannung größer ist als die erste Abgleichspannung und die erste Ausgangsspannung größer in absoluten Begriffen ist als die zweite Ausgangsspannung.

2. Verfahren gemäß Anspruch 1, wobei, zu einem gegebenen Zeitpunkt, entweder der erste Varaktor oder der zweite Varaktor gesteuert wird.

3. Verfahren gemäß einem der Ansprüche 1 bis 2, weiterhin aufweisend den Schritt des Deaktivierens der Steuerschaltung für eine vordefinierbare Zeitperiode.

4. Verfahren gemäß einem der Ansprüche 1 bis 2, wobei die Deaktivierung stattfindet, während die Schaltungsanordnung Daten empfängt und/oder während die Schaltungsanordnung Daten überträgt und/oder wenn eine vordefinierbare Summenspannung (Udd), die aus der ersten Ausgangsspannung und der zweiten Ausgangsspannung besteht, erreicht ist und/oder wenn die Deaktivierung mit einer vordefinierbaren Periodizität stattfindet.

5. Schaltungsanordnung (100, 200, 300, 500) für einen Transponder, welche aufweist: eine Steuerschaltung (103, 203, 303, 400, 503) und eine Eingangsschaltung, wobei die Eingangsschaltung aufweist: einen ersten Resonator (101, 201, 301, 501), der eine erste Wicklung (104, 204, 304, 504) und einen ersten Kondensator (105, 205, 305, 505) aufweist, und einen zweiten Resonator (102, 202, 302, 502), der eine zweite Wicklung (108, 208, 308, 508) und einen zweiten Kondensator (109, 209, 309, 509) aufweist, wobei der erste Kondensator als ein erster Varaktor gestaltet ist, wobei der zweite Kondensator als ein zweiter Varaktor gestaltet ist, wobei der erste Resonator geeignet ist, eine ersten Ausgangsspannung (U1) bereitzustellen, wobei der zweite Resonator geeignet ist, eine zweite Ausgangsspannung (U2) bereitzustellen, und wobei die Steuerschaltung geeignet ist, die Varaktoren durch Bereitstellen einer ersten Abgleichspannung (Uc1) für den ersten Varaktor und einer zweiten Abgleichspannung (Uc2) für den zweiten Varaktor zu steuern, so dass eine Resonanzfrequenz des korrespondierenden Resonators im Wesentlichen auf eine Übertragungsfrequenz derart eingestellt werden kann, dass die Ausgangsspannung des korrespondierenden Resonators bis zu einem Resonanzmaximum erhöht werden kann,
wobei die Schaltungsanordnung weiterhin eine Gleichrichterschaltung (106, 110, 206, 506, 210, 306, 510) aufweist, die zwischen der Eingangsschaltung und der Steuerschaltung gekoppelt ist, und
wobei die Schaltungsanordnung geeignet ist, ein Verfahren gemäß Anspruch 1 durchzuführen.

6. Schaltungsanordnung gemäß Anspruch 5, wobei die Steuerschaltung geeignet ist, die erste Ausgangsspannung und die zweite Ausgangsspannung zu der Eingangsseite der Steuerschaltung zu leiten.

7. Schaltungsanordnung gemäß Anspruch 6, wobei die Steuerschaltung eine Vergleichsschaltung (403, 406) aufweist, wobei die Vergleichsschaltung geeignet ist, die erste Ausgangsspannung und die zweite Ausgangsspannung miteinander zu vergleichen, und wobei die Vergleichsschaltung geeignet ist, die erste Abgleichspannung und die zweite Abgleichspannung miteinander zu vergleichen.

8. Schaltungsanordnung gemäß einem der Ansprüche 6 oder 7, wobei die Steuerschaltung weiterhin eine Mehrzahl von integrierten Schaltungselementen (412, 413) und ein Entscheidungsnetzwerk (407) aufweist, welches Entscheidungsnetzwerk einen ersten Ausgangsanschluss und einen zweiten Ausgangsanschluss aufweist, wobei der erste Ausgangsanschluss und der zweite Ausgangsanschluss mit den integrierten Schaltungselementen verbunden sind, und wobei das Entscheidungsnetzwerk so gestaltet ist, dass, zu irgendeinem Zeitpunkt, ein Signal an einem Maximum eines Ausgangsanschlusses vorhanden ist,
wobei die integrierten Schaltungselemente geeignet sind, die Abgleichspannungen bereitzustellen, und

wobei das Entscheidungsnetzwerk geeignet ist zu entscheiden, welche Abgleichspannung um einen vordefinierbaren Betrag variiert.

**Revendications**

1. Procédé de fonctionnement d'un circuit de commande (103, 203, 303, 400, 503) d'un agencement de circuit (100, 200, 300, 500) pour un transpondeur, lequel agencement de circuit comporte le circuit de commande et un circuit d'entrée, dans lequel le circuit d'entrée comporte un premier résonateur (101, 201, 301, 501), lequel premier résonateur comporte une première bobine (104, 204, 304, 504) et un premier condensateur (105, 205, 305, 505), et un deuxième résonateur (102, 202, 302, 502), lequel deuxième résonateur comporte une deuxième bobine (108, 208, 308, 508) et un deuxième condensateur (109, 209, 309, 509), dans lequel le premier condensateur est conçu en tant que premier varactor, et dans lequel le deuxième condensateur est conçu en tant que deuxième varactor, lequel procédé comprenant

   la génération d'une première tension d'accord au moyen de laquelle est commandé le premier varactor, la génération d'une deuxième tension d'accord au moyen de laquelle est commandé le deuxième varactor,
   l'évaluation d'une première tension de sortie (U1) du premier résonateur au moyen du circuit de commande ;
   l'évaluation d'une deuxième tension de sortie (U2) du deuxième résonateur au moyen du circuit de commande, les deux tensions de sortie (U1, U2) étant obtenues par redressement ;
   la commande du premier varactor de telle sorte que la première tension de sortie augmente et/ou la commande du deuxième varactor de telle sorte que la deuxième tension de sortie augmente,
   dans lequel le procédé est **caractérisé par**
   la variation d'une première tension d'accord (Uc1) de telle sorte qu'une fréquence de résonance du premier résonateur augmente si une deuxième tension d'accord (Uc2) est supérieure à la première tension d'accord et si la deuxième tension de sortie est supérieure en valeur absolue à la première tension de sortie et/ou
   la variation de la deuxième tension d'accord de telle sorte qu'une fréquence de résonance du deuxième résonateur augmente si la première tension d'accord est supérieure à la deuxième tension d'accord et si la première tension de sortie est supérieure en valeur absolue à la deuxième tension de sortie et/ou
   la variation de la première tension d'accord de telle sorte qu'une fréquence de résonance du premier résonateur diminue si la première tension d'accord est supérieure à la deuxième tension d'accord et si la deuxième tension de sortie est supérieure en valeur absolue à la première tension de sortie et/ou
   la variation de la deuxième tension d'accord de telle sorte qu'une fréquence de résonance du deuxième résonateur diminue si la deuxième tension d'accord est supérieure à la première tension d'accord et si la première tension de sortie est supérieure en valeur absolue à la deuxième tension de sortie.

2. Procédé selon la revendication 1, dans lequel, à un instant donné, soit le premier varactor, soit le deuxième varactor est commandé.

3. Procédé selon l'une quelconque des revendications 1 à 3, comprenant en outre l'étape de désactivation du circuit de commande pendant un laps de temps prédéfini.

4. Procédé selon l'une quelconque des revendications 1 à 3, dans lequel la désactivation intervient pendant que l'agencement de circuit est en train de recevoir des données et/ou pendant que l'agencement de circuit est en train de transmettre des données et/ou quand une tension de somme prédéfinie (Udd) constituée de la première tension de sortie et de la deuxième tension de sortie est atteinte et/ou lorsque la désactivation intervient avec une périodicité prédéfinie.

5. Agencement de circuit (100, 200, 300, 500) pour un transpondeur qui comporte un circuit de commande (103, 203, 303, 400, 503) et un circuit d'entrée, dans lequel le circuit d'entrée comporte un premier résonateur (101, 201, 301, 501), comprenant une première bobine (104, 204, 304, 504) et un premier condensateur (105, 205, 305, 505) ; et un deuxième résonateur (102, 202, 302, 502), qui comprend une deuxième bobine (108, 208, 308, 508) et un deuxième condensateur (109, 209, 309, 509) ; dans lequel le premier condensateur est conçu en tant que premier varactor ; dans lequel le deuxième condensateur est conçu en tant que deuxième varactor ; dans lequel le premier résonateur est agencé de manière à fournir une première tension de sortie (U1) ; dans lequel le deuxième résonateur est agencé de manière à fournir une deuxième tension de sortie (U2) ; et dans lequel le circuit de commande est agencé de manière à commander les varactors en fournissant une première tension d'accord (Uc1) pour le premier varactor et une deuxième tension d'accord (Uc2) pour le deuxième varactor, de telle sorte qu'une fréquence de résonance du résonateur correspondant peut être essentiellement fixée à une fréquence d'émission de sorte que la tension de sortie du résonateur correspondant peut être augmentée jusqu'au maximum de résonance,

dans lequel ledit agencement de circuit comporte en outre un circuit de redressement (106, 110, 206, 506, 210, 306, 310, 510) qui est raccordé entre le circuit d'entrée et le circuit de commande et

dans lequel ledit agencement de circuit est agencé de manière à réaliser le procédé selon la revendication 1.

6.  Agencement de circuit selon la revendication 6, dans lequel le circuit de commande est agencé de manière à envoyer la première tension de sortie et la deuxième tension de sortie du côté entrée du circuit de commande.

7.  Agencement de circuit selon la revendication 7, dans lequel le circuit de commande comporte un circuit de comparaison (403, 406), dans lequel le circuit de comparaison est agencé de manière à comparer la première tension de sortie et la deuxième tension de sortie l'une avec l'autre et dans lequel le circuit de comparaison est agencé de manière à comparer la première tension d'accord et la deuxième tension d'accord l'une avec l'autre.

8.  Agencement de circuit selon l'une quelconque des revendications 7 ou 8, dans lequel le circuit de commande comporte en outre une pluralité d'éléments de circuit intégrés (412, 413) et un réseau de décision (407), lequel réseau de décision comprend une première borne de sortie et une deuxième borne de sortie, dans lequel la première borne de sortie et la deuxième borne de sortie sont raccordées aux éléments de circuit intégrés, et dans lequel le réseau de décision est conçu de manière à ce qu'un instant donné, un signal présente un maximum sur une des bornes de sortie,

dans lequel les éléments de circuit intégrés sont agencés de manière à produire les tensions d'accord et

dans lequel le réseau de décision est agencé de manière à décider laquelle des tension d'accord doit subir une variation d'une quantité prédéfinie.

FIG. 1

FIG. 2

FIG. 3

FIG. 4

FIG. 5

Fall 1: f1<f2<fs & U1(fs)<U2(fs)

## FIG. 6a

Fall 2: f2<f1<fs & U2(fs)<U1(fs)

## FIG. 6b

Fall 3: f1<fs<f2 & U1(fs)<U2(fs)

## FIG. 6c

Fall 4: f2<fs<f1 & U1(fs)<U2(fs)

## FIG. 6d

Fall 5: f2<fs<f1 & U1(fs)<U2(fs)

## FIG. 6e

Fall 6: f2<fs<f1 & U2(fs)<U1(fs)

## FIG. 6f

Fall 7: fs<f2<f1 & U1(fs)<U2(fs)

## FIG. 6g

Fall 8: fs<f1<f2 & U2(fs)<U1(fs)

## FIG. 6h

Fall 1:

**FIG. 7a**

Fall 2:

**FIG. 7b**

Fall 3:

**FIG. 7c**

Fall 4:

**FIG. 7d**

FIG. 7e

FIG. 7f

FIG. 7g

FIG. 7h

FIG. 8a

FIG. 8b

FIG. 8c

FIG. 8d

FIG. 8e

FIG. 8f

FIG. 8g

FIG. 8h

FIG. 9a

FIG. 9b

FIG. 9c

FIG. 9d

FIG. 10

FIG. 11a

FIG. 11b

1102

1120

1103 — 1103

1117

1118

## FIG. 12a

1117    1103 1102    1117

1101

1118    1120

## FIG. 12b

1318

1302

1301

1320    1303

1303

1321

## FIG. 13a

1301

1303    1302

1321    1318

1320

## FIG. 13b

1401

1420

1403    1403

1417                                          1417

1422                1402

1422

1418

# FIG. 14a

1417       1403 1402           1417

1401

1422              1422

1420              1418

# FIG. 14b

1518

1502

1503

1501

1520

1503   1522                    1521

# FIG. 15a

1501

1503    1502                1521        1518

1520

# FIG. 15b

FIG. 16a

FIG. 16b

FIG. 17a

FIG. 17b

35

FIG. 18a

FIG. 18b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3721822
- JP 2005073113 B
- EP 1168226 A